# EUROPÄISCHE PATENTSCHRIFT

(11) **EP 3 372 990 B1**
(45) Veröffentlichungstag und Bekanntmachung des Hinweises auf die Patenterteilung: **24.03.2021**
(21) Anmeldenummer: 18157683.6
(22) Anmeldetag: 20.02.2018
(51) Int. Cl.: G01N 21/64, G02B 21/00

(54) **VERFAHREN UND VORRICHTUNG ZUM RÄUMLICHEN MESSEN NANOSKALIGER STRUKTUREN**
METHOD AND DEVICE FOR THE SPATIAL MEASUREMENT OF NANOSCALE STRUCTURES
PROCÉDÉ ET DISPOSITIF DE MESURE SPATIALE DE STRUCTURES NANOMÉTRIQUES

(30) Priorität: 07.03.2017 DE 102017104736
(43) Veröffentlichungstag der Anmeldung: 12.09.2018
(73) Patentinhaber: Max-Planck-Gesellschaft zur Förderung der Wissenschaften e.V., 80539 München (DE)
(72) Erfinder: Hell, Professor Dr. Stefan W., 37085 Göttingen (DE); Eilers, Dr. Yvan, 37073 Göttingen (DE); Gwosch, Klaus, 78086 Brigachtal (DE); Balzarotti, Dr. Francisco, 37083 Göttingen (DE)
(74) Vertreter: REHBERG HÜPPE + PARTNER

(56) Entgegenhaltungen:
- WO-A1-2017/153430
- US-A1- 2010 210 475
- FRANCISCO BALZAROTTI ET AL: "Nanometer resolution imaging and tracking of fluorescent molecules with minimal photon fluxes", SCIENCE, Bd. 355, Nr. 6325, 10. Februar 2017 (2017-02-10), Seiten 606-612, XP055426923, ISSN: 0036-8075, DOI: 10.1126/science.aak9913 -& FRANCISCO BALZAROTTI ET AL: "Supplementary Materials for Nanometer resolution imaging and tracking of fluorescent molecules with minimal photon fluxes", SCIENCE, 22. Dezember 2016 (2016-12-22), XP055469397, ISSN: 0036-8075, DOI: 10.1126/science.aak9913
- FABIAN GÖTTFERT ET AL: "Strong signal increase in STED fluorescence microscopy by imaging regions of subdiffraction extent", PROCEEDINGS NATIONAL ACADEMY OF SCIENCES PNAS, Bd. 114, Nr. 9, 13. Februar 2017 (2017-02-13), Seiten 2125-2130, XP055433907, US ISSN: 0027-8424, DOI: 10.1073/pnas.1621495114

## Beschreibung

### TECHNISCHES GEBIET DER ERFINDUNG

Die Erfindung bezieht sich auf ein Verfahren zum räumlichen Messen mehrerer nanoskaliger Strukturen in einer Probe sowie auf eine Vorrichtung zum Durchführen eines solchen Verfahrens.

Insbesondere umfasst das Verfahren die Schritte des Markierens der einzelnen Strukturen an verschiedenen Stellen mit Fluoreszenzmarkern, des Anregens der Fluoreszenzmarker mit Anregungslicht zur Emission von Fluoreszenzlicht, des Registrierens des aus der Probe emittierten Fluoreszenzlichts und des Bestimmens von Positionen der einzelnen Fluoreszenzmarker in der Probe aus den registrierten Intensitäten des Fluoreszenzlichts.

Noch spezieller betrifft die vorliegende Erfindung ein Verfahren, bei dem das Bestimmen der Position der einzelnen Fluoreszenzmarker in der Probe mit einer Genauigkeit jenseits der Beugungsgrenze bei der Wellenlänge des Anregungslichts und bei der Wellenlänge des Fluoreszenzlichts erfolgt. Dazu wird eine Intensitätsverteilung des Anregungslichts oder eine Intensitätsverteilung von weiterem Licht, das sich auf die Emission von Fluoreszenzlicht durch die Fluoreszenzmarker auswirkt, so ausgebildet, dass sie ein lokales Minimum aufweist, welches dann an verschiedenen Positionen in der Probe angeordnet wird. Zudem wird das aus der Probe emittierte Fluoreszenzlicht getrennt für die einzelnen Fluoreszenzmarker und für die verschiedenen Positionen des Minimums in der Probe registriert. Damit sind die Voraussetzungen dafür geschaffen, dass das Bestimmen der Positionen der einzelnen Fluoreszenzmarker in der Probe aus den für den jeweiligen Fluoreszenzmarker für die verschiedenen Positionen des Minimums registrierten Intensitäten des Fluoreszenzlichts mit einer Genauigkeit weit jenseits der Beugungsgrenze möglich ist.

### STAND DER TECHNIK

Ein Verfahren mit den Merkmalen des Oberbegriffs des unabhängigen Patentanspruchs 1, bei dem die Intensitätsverteilung des Anregungslichts das lokale Minimum aufweist, ist als MINFLUX-Mikroskopie bekannt, siehe FRANCISCO BALZAROTTI ET AL.: "Nanometer resolution imaging and tracking of fluorescent molecules with minimal photon fluxes", SCIENCE, Bd. 355, Nr. 6325, 10. Februar 2017, Seiten 606-612 und FRANCISCO BALZAROTTI ET AL.: "Supplementary Materials for Nanometer resolution imaging and tracking of fluorescent molecules with minimal photon fluxes", SCIENCE; 22. Dezember, 2016. Bei der MINFLUX-Mikroskopie werden die Positionen von vereinzelten Fluoreszenzmarkern in einer Probe dadurch bestimmt, dass die Nullstelle einer Intensitätsverteilung von Anregungslicht an einem Mittelpunkt eines Messbereichs und an drei gleichmäßig darum herum verteilten Positionen am Rand des Messbereichs angeordnet und an diesen insgesamt vier Positionen der Nullstelle die Intensität des Fluoreszenzlichts von dem jeweiligen Fluoreszenzmarker gemessen wird. Je näher die vier Positionen der Nullstelle beieinander liegen und dennoch zusammen die gesuchte Position des jeweiligen Fluoreszenzmarkers überspannen, desto genauer kann die Position des Fluoreszenzmarkers aus nur wenigen Photonen des Fluoreszenzlichts, die für jede der Positionen der Nullstelle registriert werden, bestimmt werden.

Aus FABIAN GÖTTFERT ET AL.: "Strong signal increase in STED fluorescence microscopy by imaging regions of subdiffraction extent", PROCEEDINGS NATIONAL ACADEMY OF SCIENCES PNAS, Bd. 114, Nr. 9, 13. Februar 2017, Seiten 2125-2130 ist ein Verfahren zum räumlich hochauflösenden Abbilden einer mit Fluoreszenzmarkern markierten Struktur in einer Probe bekannt. Es handelt sich um ein Verfahren der STED-Fluoreszenzmikroskopie, bei dem die Probe neben Anregungslicht mit Stimulationslicht als Fluoreszenzverhinderungslicht beaufschlagt wird, um den Bereich der Probe, dem aus der Probe emittiertes und detektiertes Fluoreszenzlicht zugeordnet werden kann, auf den Bereich einer Nullstelle des Stimulationslichts zu begrenzen. Um dabei die Fluoreszenzmarker vor den hohen Intensitäten des Stimulationslichts im Bereich seiner an die Nullstelle angrenzenden Intensitätsmaxima und den damit verbundenen Gefahren eines photochemischen Bleichens zu schützen, wird die Nullstelle ausschließlich innerhalb eines Nahbereichs in der Probe angeordnet, dessen Abmessungen deutlich kleiner als ein Abstand dieser Intensitätsmaxima sind. Dieses Vorgehen wird als MINFIELD-Konzept bezeichnet.

Aus der US 2010/0210475 A1 sind ein Mikroarray mit hellen Bezugsmarkierungen und ein Verfahren zum Erhalten von optischen Daten von dem Mikroarray bekannt. Die Bezugsmarkierungen sind beabstandet zu Bereichen eines Substrats angeordnet, in denen eine zu untersuchende Verbindung immobilisiert wird. Die Bezugsmarkierungen haben eine Struktur, die eingestrahltes Licht mit einer stärkeren Intensität reflektiert als die Bereiche des Substrats, die nicht als Bezugsmarkierungen ausgebildet sind. Anhand des reflektierten Lichts sind die Bezugsmarkierungen zu identifizieren.

Beim sogenannten Drug Screening und anderen Verfahren, mit denen eine Vielzahl von Substanzen danach durchsucht wird, ob sie Substanzen mit speziellen Eigenschaften in Bezug auf andere Substanzen oder biologische Objekte umfassen, werden die Substanzen jeweils mehrfach mit den anderen Substanzen oder mehreren Exemplaren der Objekte in Kontakt gebracht und die darauf erfolgenden Reaktionen der anderen Substanzen oder Objekte beobachtet. Die Zahl der dabei insgesamt zu beobachtenden Reaktionen beträgt typischerweise ein Vielfaches der Anzahl der durchsuchenden Substanzen, weil zum einen mehrere identische Paarungen notwendig sind, um statistisch aussagekräftige Ergebnisse zu erhalten, und weil zum anderen die Substanzen die gewünschten Eigenschaften häufig gegenüber verschiedenen anderen Substanzen oder verschiedenen biologischen Objekten zeigen sollen. Das systematische Erfassen einer solchen großen Anzahl von Reaktionen ist grundsätzlich aufwändig. Vielfach sind Reaktionen auf molekularem Niveau auch nur mit Hilfe von Nachweisreaktionen erfassbar. Das Erfassen einer Reaktionsdynamik ist oftmals gar nicht möglich.

Aus der WO 2014/108455 A1 ist ein Verfahren zum räumlich hochauflösenden Abbilden einer mit Fluoreszenzmarkern markierten Struktur einer Probe bekannt, bei dem die Probe wie in der STED-Fluoreszenzmikroskopie mit Anregungslicht und mit Stimulationslicht als Fluoreszenzverhinderungslicht beaufschlagt wird, um den Bereich der Probe, dem aus der Probe emittiertes und detektiertes Fluoreszenzlicht zugeordnet werden kann, auf den Bereich einer Nullstelle des Stimulationslichts zu begrenzen. Um dabei die Fluoreszenzmarker vor den hohen Intensitäten des Stimulationslichts im Bereich seiner an die Nullstelle angrenzenden Intensitätsmaxima zu schützen, wird die Probe zusätzlich mit Anregungsverhinderungslicht beaufschlagt, dessen Intensitätsverteilung ein lokales Minimum aufweist, das mit der Nullstelle des Stimulationslichts zusammenfällt. Dieses Anregungsverhinderungslicht kann insbesondere Ausschaltlicht sein, das schaltbare Fluoreszenzmarker außerhalb des Minimums des Anregungsverhinderungslichts in einen inaktiven Zustand ausschaltet, in dem sie mit dem Anregungslicht nicht zur Emission von Fluoreszenzlicht anregbar sind. Konkret kann es sich bei den Fluoreszenzmarkern um schaltbare Fluoreszenzfarbstoffe handeln, wie sie bei der hochauflösenden RESOLFT-Fluoreszenzmikroskopie zum Einsatz kommen.

### AUFGABE DER ERFINDUNG

Der Erfindung liegt die Aufgabe zugrunde, ein Verfahren mit den Merkmalen des Oberbegriffs des unabhängigen Patentanspruchs 1 aufzuzeigen, mit dem eine Vielzahl von nanoskaligen Strukturen auch wiederholt schnell gemessen werden kann, um Reaktionen der nanoskaligen Strukturen auf geänderte Umgebungsbedingungen zu erfassen, wie dies im Rahmen eines Drug Screenings erforderlich ist, bei dem die veränderten Umgebungsbedingungen auf das Hinzufügen einer der zur durchsuchenden Substanzen beruhen.

### LÖSUNG

Die Aufgabe der Erfindung wird durch ein Verfahren mit den Merkmalen des unabhängigen Patentanspruchs 1 gelöst. Die abhängigen Patentansprüche 2 bis 13 betreffen bevorzugte Ausführungsformen des erfindungsgemäßen Verfahrens. Der Patentanspruch 14 ist auf eine Vorrichtung zum räumlichen Messen mehrerer nanoskaliger Strukturen in einer Probe mit einer Steuerung zur automatischen Durchführung des erfindungsgemäßen Verfahrens gerichtet.

### BESCHREIBUNG DER ERFINDUNG

Ein erfindungsgemäßes Verfahren zum räumlichen Messen mehrerer nanoskaliger Strukturen in einer Probe umfasst die sich teilweise überlappenden Schritte Markieren, Koppeln, Anregen, Anordnen, Registrieren und Bestimmen.

Dass bei dem erfindungsgemäßen Verfahren nanoskalige Strukturen gemessen werden, bedeutet, dass diese Strukturen nanoskalige Abmessungen von maximal 200 nm, häufig von maximal 100 nm und oftmals von maximal 50 nm oder auch nur 30 nm, aufweisen.

Beim Markieren werden die einzelnen Strukturen an verschiedenen Stellen mit Fluoreszenzmarkern markiert. Das heißt, jede Struktur, die erfindungsgemäß gemessen wird, wird mit mindestens zwei Fluoreszenzmarkern markiert, die an zwei verschiedenen Stellen an der Struktur angebracht werden. Zum möglichst schnellen Messen der Strukturen kann die Zahl der Fluoreszenzmarker, mit denen jede Struktur markiert wird, auch gezielt klein gehalten und beispielsweise auf nicht mehr als 10 beschränkt werden. Vorzugsweise werden dabei alle gleichen Strukturen an gleichen Stellen mit einer gleichen Zahl von Fluoreszenzmarkern markiert. Die Fluoreszenzmarker, die an verschiedenen Stellen einer Struktur angebracht werden, können gleich oder unterschiedlich sein.

Beim Koppeln werden die einzelnen Strukturen an einzelne Positionierhilfsmittel gekoppelt. Dies bedeutet, dass jede nach dem erfindungsgemäßen Verfahren gemessene Struktur an ein Positionierhilfsmittel angekoppelt wird. Bei den Positionierhilfsmitteln handelt es sich um solche, deren Positionen in der Probe bereits bekannt sind, weil sie beispielsweise bei der Herstellung oder Vorbereitung der Probe gezielt an diesen Positionen angeordnet wurden und/oder weil ihre in der Probe festliegenden Positionen bereits vor dem Koppeln auf irgendeine Weise bestimmt wurden. Alternativ oder zusätzlich können die Positionen der Positionierhilfsmittel in der Probe fortlaufend und damit auch noch nach dem Koppeln aus Licht bestimmt werden, das von den Positionierhilfsmitteln reflektiert wird. Mit ihren oben angegebenen maximalen Abmessungen erstrecken sich die nanoskaligen Strukturen von der Position des jeweiligen Positionierhilfsmittels, bei endseitiger Kopplung über nicht wesentlich mehr als 200 nm, 100 nm, 50 nm oder 30 nm und bei bevorzugter zentraler Ankopplung über nicht wesentlich mehr als 100 nm, 50 nm, 25 nm oder 15 nm.

Beim Anregen werden die Fluoreszenzmarker, mit denen die zu messenden Strukturen markiert sind, mit Anregungslicht zur Emission von Fluoreszenzlicht angeregt. Dabei weist eine Intensitätsverteilung des Anregungslichts oder eine Intensitätsverteilung von weiterem Licht, das sich auf die Emission von Fluoreszenzlicht durch die Fluoreszenzmarker auswirkt, ein lokales Minimum auf, das beim Anregen an verschiedenen Positionen in der Probe angeordnet wird. Das lokale Minimum kann eine echte Nullstelle der jeweiligen Intensitätsverteilung sein, in der die Intensität des Anregungslichts oder des weiteren Lichts tatsächlich auf null zurück geht. In jedem Fall ist eine nur geringe Restintensität des Anregungslichts oder des weiteren Lichts in dem lokalen Minimum erwünscht. In allen Richtungen, in denen die Strukturen bei dem erfindungsgemäßen Verfahren gemessen werden, ist das lokale Minimum durch ein Maximum der jeweiligen Intensitätsverteilung begrenzt.

Beim Anordnen, das das Anregen in spezieller Form ausführt, wird das lokale Minimum an verschiedenen Positionen in einem Nahbereich um die bekannte Position des jeweiligen Positionierhilfsmittels angeordnet. Die Abmessungen dieses Nahbereichs, womit insbesondere dessen Durchmesser gemeint ist, sind nicht größer als die Beugungsgrenze bei der Wellenlänge des Anregungslichts und der Wellenlänge des Fluoreszenzlichts. Auch wenn die Positionen der einzelnen Positionierungshilfsmittel in der Probe fest und grundsätzlich bekannt sind, kann mithilfe von Licht, das von den Positionierungshilfsmitteln reflektiert wird, das Anfahren dieser Positionen bzw. der sich darum erstreckenden Nahbereiche mit dem lokalen Minimum unterstützt oder sogar vollständig gesteuert werden.

Beim Registrieren wird das aus der Probe emittierte Fluoreszenzlicht getrennt für die einzelnen Fluoreszenzmarke und für die verschiedenen Positionen des Minimums in der Probe registriert. So kann das registrierte Fluoreszenzlicht jeweils sowohl einem bestimmten Fluoreszenzmarker als auch einer bestimmten Position des Minimums in der Probe zugeordnet werden.

Damit ist es beim Bestimmen möglich, die Positionen der einzelnen Fluoreszenzmarker in der Probe aus dem für den jeweiligen Fluoreszenzmarker für die verschiedenen Positionen des Minimums registrierten Intensitäten des Fluoreszenzlichts auf Basis einer nur kleinen Anzahl von Photonen des Fluoreszenzlichts von dem jeweiligen Fluoreszenzmarker zu bestimmen.

Das Messen von nur mit wenigen Fluoreszenzmarkern markierten Strukturen bedeutet insbesondere ein Vermessen von Abständen zwischen den Positionen der Fluoreszenzmarker an den Strukturen.

Bei dem erfindungsgemäßen Verfahren kann der Nahbereich um die Position des Positionierhilfsmittels mit dem Minimum der Intensitätsverteilung des Anregungslichts oder des weiteren Lichts gezielt angefahren werden, weil die Position des Positionierhilfsmittels von vornherein bekannt ist oder bestimmt wird, ohne dass es hierfür der Emission von Photonen des Fluoreszenzlichts von den Fluoreszenzmarkern bedarf. Das Messen jeder einzelnen Struktur mit Hilfe der Fluoreszenzmarker erfolgt bei dem erfindungsgemäßen Verfahren also unter Ausnutzung einer Vorkenntnis über die Position der einzelnen Fluoreszenzmarker. Aufgrund des Ankoppelns der interessierenden Strukturen an die Positionierhilfsmittel befinden sich jede Struktur und damit auch die an ihr anhängenden Fluoreszenzmarker in der unmittelbaren Nähe eines Positionierhilfsmittels. Beim Anfahren des Nahbereichs um dieses Positionierhilfsmittels mit dem Minimum der Lichtintensitätsverteilung des Anregungslichts oder des weiteren Lichts liegt dieses Minimum daher schon nahe an dem jeweiligen Fluoreszenzmarker. Je genauer die Position der Positionierhilfsmittel bekannt ist, desto kleiner kann der Nahbereich gewählt werden, in dem das Minimum der Lichtintensitätsverteilung des Anregungslichts oder des weiteren Lichts an verschiedenen Positionen angeordnet wird, um die Position des jeweiligen Fluoreszenzmarkers zu bestimmen.

Erfindungsgemäß sind die Abmessungen des Nahbereichs jedenfalls nicht größer als die Beugungsgrenze bei der Wellenlänge des Anregungslichts und der Wellenlänge des Fluoreszenzlichts, und der Nahbereich wird durch das Anordnen des lokalen Minimums an den verschiedenen Stellen innerhalb des Nahbereichs abgetastet, d. h. unterteilt, so dass die Positionen der Fluoreszenzmarker mit einer Ortsauflösung von einem Bruchteil der Abmessungen des Nahbereichs bestimmt werden können. Vorzugsweise sind die Abmessungen des Nahbereichs, in dem das lokale Minimum an verschiedenen Positionen um die Position des jeweiligen Positionierhilfsmittels angeordnet wird, nicht größer als die Hälfte und noch mehr bevorzugt nicht größer als ein Viertel der Beugungsgrenze bei der Wellenlänge des Anregungslichts und der Wellenlänge des Fluoreszenzlichts. Dies impliziert, dass die Position des jeweiligen Positionierhilfsmittels mit einer noch darüber hinaus gehenden Genauigkeit bekannt sein oder bestimmt werden muss.

Die Ausführungsform des erfindungsgemäßen Verfahrens, bei der die Intensitätsverteilung des Anregungslichts das lokale Minimum aufweist, kann als Ausführungsform der bekannten MINFLUX-Mikroskopie realisiert werden. Bei der anderen Ausführungsform des erfindungsgemäßen Verfahrens, bei der die Intensitätsverteilung des weiteren Lichts, das sich auf die Emission von Fluoreszenzlicht durch die Fluoreszenzmarker auswirkt, das lokale Minimum aufweist, kann eine Intensitätsverteilung des Anregungslichts ein Maximum an der jeweiligen Position des lokalen Minimums der Intensitätsverteilung des weiteren Lichts aufweisen, und das weitere Licht kann Fluoreszenzverhinderungslicht sein, das die Emission von Fluoreszenzlicht durch die Fluoreszenzmarker verhindert. Bei dieser Ausführungsform des erfindungsgemäßen Verfahrens werden also das Anregungslicht und Fluoreszenzverhinderungslicht mit solchen Intensitätsverteilungen überlagert, wie dies auch bei der RESOLFT- und insbesondere der STED-Mikroskopie geschieht. Bei dieser Ausführungsform des erfindungsgemäßen Verfahrens wird jedoch zumindest nicht nur ausgenutzt, dass das Fluoreszenzlicht nur von einem Fluoreszenzmarker stammen kann, der sich in dem Bereich des lokalen Minimums befindet. Vielmehr wird auch die Abhängigkeit der Intensität des Fluoreszenzlichts, die für den jeweiligen Fluoreszenzmarker registriert wird, von der Entfernung seiner Position zu der Position des lokalen Minimums ausgenutzt, um dessen Position mit besonders hoher Genauigkeit aus den für mehrere Positionen des Minimums registrierten Intensitäten des Fluoreszenzlichts zu bestimmen. Entsprechend kann auch bei dieser Variante des erfindungsgemäßen Verfahrens, bei dem die Intensitätsverteilung des weiteren Lichts das lokale Minimum aufweist, das lokale Minimum an so wenigen Positionen in der Probe positioniert werden und die Auswertung der Intensitäten des registrierten Fluoreszenzlichts nach denselben Prinzipien erfolgen wie bei der MINFLUX-Mikroskopie. Als Unterschied verbleibt jedoch, dass bei der MINFLUX-Mikroskopie die Intensität des Fluoreszenzlichts von dem Fluoreszenzmarker mit zunehmendem Abstand seiner Position zu der Position des lokalen Minimums zunimmt, während sie bei der Ausführungsform des erfindungsgemäßen Verfahrens, bei der das weitere Licht Fluoreszenzverhinderungslicht ist, mit zunehmendem Abstand abnimmt.

Bei der Ausführungsform des erfindungsgemäßen Verfahrens, bei der die Intensitätsverteilung des Anregungslichts das lokale Minimum aufweist, werden die vereinzelten Fluoreszenzmarker nur mit einer minimalen Lichtmenge beaufschlagt und dadurch nur minimal photochemisch belastet. Bei der Ausführungsform, bei der das weitere Licht, dessen Intensitätsverteilung die Nullstelle aufweist, Fluoreszenzverhinderungslicht ist, wird durch die an die Nullstelle angrenzenden Intensitätsmaxima des Fluoreszenzverhinderungslichts in vorteilhafter Weise verhindert, dass von in der Nähe befindlichen anderen Fluoreszenzmarkern emittiertes Fluoreszenzenzlicht die Positionsbestimmung stört.

Bei der Durchführung des erfindungsgemäßen Verfahrens hat sich herausgestellt, dass das lokale Minimum nicht an vielen verschiedenen Positionen in dem Nahbereich um die Position des jeweiligen Positionierhilfsmittels angeordnet werden muss, um die Position des jeweiligen Fluoreszenzmarkers mit einer verglichen mit den Abmessungen des Nahbereichs sehr hohen Ortsauflösung zu bestimmen. Entsprechend werden die Positionen der einzelnen Fluoreszenzmarker bei dem erfindungsgemäßen Verfahren typischerweise aus den für nicht mehr als 4n, häufig aus den für nicht mehr als 3n und besonders bevorzugt aus den für nicht mehr als 2n verschiedene Positionen des Minimums registrierten Intensitäten des Fluoreszenzlichts bestimmt. Dabei ist n die Anzahl der Raumrichtungen, in denen die Positionen der einzelnen Fluoreszenzmarker in der Probe bestimmt werden.

Das Bestimmen der Positionen der einzelnen Fluoreszenzmarker in der Probe kann insbesondere ein Anfitten einer ein lokales Extremum aufweisenden räumlichen Funktion an die für den jeweiligen Fluoreszenzmarker für die verschiedenen Positionen des Minimums registrierten Intensitäten des Fluoreszenzlichts umfassen. Bei der Ausführungsform des erfindungsgemäßen Verfahrens, bei der die Intensitätsverteilung des Anregungslichts das lokale Minimum aufweist, ist das lokale Extremum der räumlichen Funktion ebenfalls ein lokales Minimum. Bei der Ausführungsform, bei der das weitere Licht, dessen Intensitätsverteilung die Nullstelle aufweist, Fluoreszenzverhinderungslicht ist, ist das lokale Extremum der räumlichen Funktion hingegen ein lokales Maximum.

Die das lokales Extremum aufweisende räumlichen Funktion weist idealer Weise denselben Verlauf auf wie die Intensität des Fluoreszenzlichts von dem jeweiligen Fluoreszenzmarker über dessen Abstand zu dem lokalen Minimum der Intensitätsverteilung des Anregungslichts bzw. des weiteren Lichts. Um die das lokales Extremum aufweisende räumlichen Funktion zu bestimmen, kann daher mindestens eines der Licht reflektierenden Positionierhilfsmittel oder direkt mindestens einer der Fluoreszenzmarker oder ein weiterer gleichartiger Fluoreszenzmarker mit dem Minimum abgetastet werden, wobei das aus der Probe reflektierte Licht oder emittierte Fluoreszenzlicht registriert wird. Dabei bedeutet Abtasten, dass das lokale Minimum hierbei in verglichen mit den wenigen Positionen des lokalen Minimums in dem jeweiligen Nahbereich vielen kleinen Schritten verlagert wird. Beim Abtasten des mindestens einen der Licht reflektierenden Positionierhilfsmittel kann zudem dessen Position in der Probe und damit der Mittelpunkt des zugehörigen Nahbereichs bestimmt werden.

Damit das aus der Probe emittierte Fluoreszenzlicht getrennt für die einzelnen Fluoreszenzmarker registriert werden kann, mit denen die jeweilige Struktur markiert ist, muss das von den verschiedenen Fluoreszenzmarkern emittierte Fluoreszenzlicht trennbar sein. Dabei ist es nicht möglich, das Fluoreszenzlicht von den verschiedenen Fluoreszenzmarkern danach zu trennen, von wo es aus der Probe emittiert wird, da mehrere Fluoreszenzmarker jeweils an derselben nanoskaligen Struktur angebracht sind und damit näher, in aller Regel viel näher beieinanderliegen als die Beugungsgrenze bei der Wellenlänge des Fluoreszenzlichts. Daher müssen andere Unterscheidungsmöglichkeiten des Fluoreszenzlichts von den einzelnen Fluoreszenzmarkern vorhanden sein oder geschaffen werden.

Wenn die Fluoreszenzmarker, mit denen die einzelnen Strukturen an verschiedenen Stellen markiert werden, aus Fluoreszenzmarkern ausgewählt werden, die sich in ihren spektralen Eigenschaften unterscheiden, können die einzelnen Fluoreszenzmarker an der jeweiligen Struktur selektiv mit Anregungslicht unterschiedlicher Wellenlängen angeregt werden und/oder das von ihnen emittierte Fluoreszenzlicht kann wellenlängenselektiv detektiert werden. Weiterhin können die Fluoreszenzmarker aus solchen ausgewählt werden, die einen aktiven Zustand, in dem sie mit Anregungslicht zur Emission von Fluoreszenzlicht anregbar sind, und einen inaktiven Zustand, in dem sie zumindest mit demselben Anregungslicht nicht zur Emission von Fluoreszenzlicht anregbar sind, aufweisen und die zwischen ihrem aktiven und ihrem inaktiven Zustand überführbar sind. Dann kann selektiv oder auf Übergangswahrscheinlichkeiten basierend jeweils nur ein Fluoreszenzmarker in seinem aktiven Zustand belassen oder in seinen aktiven Zustand gebracht werden, so dass das registrierte Fluoreszenzlicht nach Anregung mit dem Anregungslicht nur von ihm stammen kann. Bei der Vorgehensweise auf Basis von Übergangswahrscheinlichkeiten kann es zwar sein, dass wiederholt nacheinander derselbe Fluoreszenzmarker in den aktiven Zustand gelangt. Dies wird jedoch mit wachsender Zahl der Wiederholungen zunehmend unwahrscheinlicher.

Erfindungsgemäß werden die Fluoreszenzmarker daher aus solchen ausgewählt, die sich in ihrem Anregungsspektrum und/oder ihrem Emissionsspektrum unterscheiden oder die mit Schaltlicht aus ihrem aktiven Zustand in ihren inaktiven Zustand schaltbar sind. Das Schaltlicht kann dabei grundsätzlich dieselbe Wellenlänge wie das Anregungslicht oder das weitere Licht aufweisen, das sich auf die Emission des Fluoreszenzlichts durch die Fluoreszenzmarker auswirkt.
Bei der praktischen Umsetzung des erfindungsgemäßen Verfahrens können die Positionen der Positionierhilfsmittel, d. h. die Nahbereiche, mit anderen Mitteln zur Relativverlagerung des Minimums gegenüber der Probe angefahren werden als die Positionen des Minimums innerhalb der Nahbereiche. Dies ermöglicht es, für die Feinpositionierung des Minimums innerhalb der Nahbereiche Mittel einzusetzen, die zwar zur präzisen Positionierung des Minimums in der Probe geeignet sind, aber nicht zur Verlagerung des Minimums über größere Entfernungen. Diese größeren Entfernungen können dann mit den Mitteln zum Anfahren der Positionen der Positionierhilfsmittel überbrückt werden. Konkret können die Mittel zum Anfahren der Positionen der Positionierhilfsmittel die gesamte Probe gegenüber einem Objektiv verlagern, das das Anregungslicht in die Probe fokussiert, während das Minimum innerhalb des jeweiligen Nahbereichs mit gegenüber dem Objektiv arbeitenden Strahlablenkmitteln verlagert wird.

Vorzugsweise liegen bei dem erfindungsgemäßen Verfahren die Positionen der Positionierhilfsmittel in der Probe und damit relativ zu Fixpunkten der Probe fest, und die Positionen der Positionierhilfsmittel, d. h. die einzelnen Nahbereiche, werden relativ zu den Fixpunkten der Probe angefahren.

Vorteilhafter Weise werden die Strukturen durch ihr Koppeln an die Positionierhilfsmittel nicht nur in eine bekannte oder ohne Belastung der Fluoreszenzmarker bestimmbare Position gebracht, sondern die Strukturen werden zugleich definiert ausgerichtet, d. h. beispielsweise parallel zu einer Haupterstreckungsebene der jeweiligen Probe orientiert. Diese Orientierung verfolgt insbesondere den Zweck, die Strukturen so gegenüber der Probe zu orientieren, dass Abstände der Fluoreszenzmarker bzw. der verschiedenen Stellen, an denen die Strukturen mit den Fluoreszenzmarkern markiert sind, in oder parallel zu der Richtung oder Ebene verlaufen, in der das lokale Minimum an verschiedenen Positionen in der Probe angeordnet wird. Damit werden diese Abstände und auch Änderungen dieser Abstände durch das Bestimmen der Positionen der einzelnen Fluoreszenzmarker besonders leicht erfassbar. Auch wenn eine solche zielgerichtete Orientierung der an die Positionierhilfsmittel gekoppelten Strukturen nicht möglich ist, kann oftmals erreicht werden, dass die an die Positionierhilfsmittel angekoppelten Strukturen eine feste Orientierung in der Probe aufweisen. Dann kann nach einem erstmaligen Bestimmen der Positionen der Fluoreszenzmarker überprüft werden, welche der Strukturen so orientiert sind, dass die Abstände ihrer mit den Fluoreszenzmarkern markierten Bereiche in der Haupterstreckungsebene der Probe verlaufen. Bei wiederholtem Durchführen des Bestimmens der Positionen der Fluoreszenzmarker, um beispielsweise Reaktionen der Strukturen auf veränderte Umgebungsbedingungen zu erfassen, kann das erfindungsgemäße Verfahren danach auf die Strukturen beschränkt werden, die die gewünschte Orientierung aufweisen, während andere Strukturen, die diese Orientierung nicht aufweisen, nicht weiter berücksichtigt werden. Dies ist insbesondere sinnvoll, um schnell aussagekräftige Informationen über Reaktionen der Strukturen auf geänderte Umgebungsbedingungen zu erfassen.

Weiterhin ist es bevorzugt, wenn die Positionen der Positionierhilfsmittel in Mindestabständen zueinander angeordnet werden, die mindestens doppelt so groß wie die Beugungsgrenze bei der Wellenlänge des Anregungslichts und des Fluoreszenzlichts sind. Damit kann das Fluoreszenzlicht aus der Probe den einzelnen Nahbereichen und damit den einzelnen zu messenden nanoskaligen Strukturen mit optischen Mitteln getrennt zugeordnet werden. Wenn die Positionen der Positionierhilfsmittel willkürlich festgelegt werden, indem sie beispielsweise in einem vordefinierten Muster in der Probe angeordnet werden, ist der genannte Mindestabstand von der doppelten Beugungsgrenze bei der Wellenlänge des Anregungslichts und der Wellenlänge des Fluoreszenzlichts direkt einzuhalten. Wenn jedoch die Positionierhilfsmittel zufällig in der Probe verteilt werden, muss mit einer geringen Dichte der Positionierhilfsmittel dafür Sorge getragen werden, dass ihre Abstände nicht kleiner als die doppelte Beugungsgrenze bei der Wellenlänge des Anregungslichts und der Wellenlänge des Fluoreszenzlichts sind. Dies erfordert in aller Regel eine Dichte die deutlich kleiner als der Kehrwert der doppelten Beugungsgrenze bei der Wellenlänge des Anregungslichts und der Wellenlänge des Fluoreszenzlichts ist. Alternativ oder zusätzlich können die Positionierhilfsmittel auf die zwischen ihnen vorliegenden Abstände überprüft werden. Danach können die Positionierhilfsmittel, deren Positionen als zu dicht beieinanderliegend erkannt wurden, und die an sie angekoppelten nanoskaligen Strukturen bei der weiteren Durchführung des erfindungsgemäßen Verfahrens unberücksichtigt bleiben.

Wenn die Positionen der Positionierhilfsmittel in einem vordefinierten Muster in der Probe angeordnet werden, kann das vordefinierte Muster insbesondere aus periodischen und noch spezieller aus hexagonalen und quadratischen Mustern ausgewählt werden. Dann sind auch die bei der Durchführung des erfindungsgemäßen Verfahrens anzufahrenden Nahbereiche in einem solchen periodischen, hexagonalen oder quadratischen Muster angeordnet. In einem hexagonalen Muster ist die Dichte der Positionierhilfsmittel, die die Mindestabstände von der doppelten Beugungsgrenze bei der Wellenlänge des Anregungslichts und der Wellenlänge des Fluoreszenzlichts einhalten, maximiert.

Soweit hier mit der Ausführungsform des erfindungsgemäßen Verfahrens, bei der die Intensitätsverteilung des weiteren Lichts, das sich auf die Emission von Fluoreszenzlicht durch die Fluoreszenzmarker auswirkt, Fluoreszenzverhinderungslicht ist und das lokale Minimum aufweist, und die Intensitätsverteilung des Anregungslichts das Maximum an der jeweiligen Position des lokalen Minimums der Intensitätsverteilung des weiteren Lichts aufweist, eine ähnliche Vorgehensweise wie bei der RESOLFT- und insbesondere der STED-Mikroskopie offenbart wird, so ist hierin auch unabhängig von dem räumlichen Messen mehrerer nanoskaliger Strukturen, dem Koppeln der einzelnen Strukturen an einzelne Positionierhilfsmittel und dem Anordnen des lokalen Minimums an den verschiedenen Positionen speziell in dem Nahbereich um die Position des jeweiligen Positionierhilfsmittels eine eigenständige Erfindung zu sehen.

Diese eigenständige Erfindung unterscheidet sich von der RESOLFT- und STED-Mikroskopie dadurch, dass gezielt die Positionen vereinzelter Fluoreszenzmarker bestimmt werden, wozu die Fluoreszenzmarker vielfach zunächst zu vereinzeln sind, und dass für die Positionsbestimmung die zu wenigen verschiedenen Positionen des lokalen Minimums registrierten Intensitäten des Fluoreszenzlichts in der Regel durch Anfitten einer ein lokales Maximum aufweisenden Funktion ausgewertet werden. Dabei kann die Position des lokalen Maximums der angefitteten Funktion der gesuchten Position des Fluoreszenzmarkers in der Probe gleichgesetzt werden. Gegenüber dem entsprechenden Vorgehen bei der MINFLUX-Mikroskopie weist diese eigenständige Erfindung den Vorteil auf, dass durch die an die Nullstelle angrenzenden Intensitätsmaxima des Fluoreszenzverhinderungslichts in vorteilhafter Weise verhindert wird, dass von in der Nähe befindlichen anderen Fluoreszenzmarkern emittiertes Fluoreszenzlicht die Positionsbestimmung stört. Weiterhin kann diese eigenständige Erfindung alle hier offenbarten weiteren Merkmale des erfindungsgemäßen Verfahrens aufweisen oder auch nicht.

In einer bevorzugten Variante der Ausführungsform des erfindungsgemäßen Verfahrens, bei der die Intensitätsverteilung des Anregungslichts oder des weiteren Lichts, das sich auf die Emission von Fluoreszenzlicht durch die Fluoreszenzmarker auswirkt, das lokale Minimum aufweist, wird das aus der WO 2014/108455 A1 bekannte Konzept, die aktuell nicht gemessenen Fluoreszenzmarker durch Schalten in einen inaktiven Zustand vor den hohen Intensitäten im Bereich der an das lokale Minimum angrenzenden Maxima zu schützen, in abgewandelter Form angewandt. Konkret wird vor dem Anordnen des lokalen Minimums in dem jeweiligen Nahbereich zusätzliches Ausschaltlicht mit einer solchen Intensitätsverteilung auf die Probe gerichtet, dass es die schaltbaren Fluoreszenzmarker in an den Nahbereich angrenzenden Teilbereichen der Probe in einen inaktiven Zustand ausschaltet. Damit werden die Fluoreszenzmarker dort in den inaktiven Zustand geschaltet, wo die Maxima des Anregungslichts bzw. des weiteren Lichts auftreten und wo ohne diese Schutzmaßnahme die Fluoreszenzmarker durch die hohen Intensitäten des Anregungslichts bzw. des weiteren Lichts belastet würden und von wo sie nur die aktuelle Messung beeinträchtigendes Fluoreszenzlicht emittieren würden. Die absolute Dichte der nanoskaligen Strukturen in der Probe kann dann besonders hoch sein, ohne dass das Messen jeder nanoskaligen Struktur, die ihr benachbarten nanoskaligen Strukturen photochemisch belasten muss oder Fluoreszenzlicht von den benachbarten nanoskaligen Strukturen die aktuelle Messung stört.

Bei der praktischen Umsetzung des erfindungsgemäßen Verfahrens können die Positionierhilfsmittel in der Probe festliegende Ankoppelplätze für die Strukturen sein, die in dem vordefinierten Muster in der Probe angeordnet sein können. Insbesondere können die Strukturen über eine Immunreaktion an die Ankoppelplätze angekoppelt werden. Dabei kann vor der Durchführung des erfindungsgemäßen Verfahrens zunächst ein zusätzlicher Fluoreszenzmarker an die Ankoppelplätze angekoppelt werden, dessen Fluoreszenzlicht zur Bestimmung der Positionen der Ankoppelplätze benutzt wird. Dabei können sehr viele Photonen des Fluoreszenzlichts von dem weiteren Fluoreszenzmarker genutzt werden, um die Positionen der Ankoppelplätze mit sehr hoher Genauigkeit zu bestimmen. Anschließend können diese weiteren Fluoreszenzmarker wieder von den Ankoppelplätzen abgelöst werden, deren Positionen dann bekannt sind, wenn beim anschließenden Durchführen des erfindungsgemäßen Verfahrens die nanoskaligen Strukturen angekoppelt werden.

Wenn hingegen die nanoskaligen Strukturen an die Positionierhilfsmittel angekoppelt werden, bevor deren Positionen bekannt sind, sind Möglichkeiten bereitzustellen, die Positionen der Positionierhilfsmittel zu bestimmen, ohne hierfür auf Fluoreszenzlicht von den Fluoreszenzmarkern an den nanoskaligen Strukturen zurück greifen zu müssen. Zu diesem Zweck können die Positionierhilfsmittel Gold- oder Silberpartikel oder Quantum Dots aufweisen, die Licht reflektieren, mit dessen Hilfe die Positionen der Positionierhilfsmittel mit hoher Genauigkeit bestimmt werden kann.

In einer Ausführungsform des erfindungsgemäßen Verfahrens sind die gemessenen nanoskaligen Strukturen gleich oder umfassen zumindest mehrere gleiche Strukturen. Dabei können die gleichen Strukturen in verschiedenen Bereichen der Probe verschiedenen Umgebungsbedingungen ausgesetzt werden, um die Einflüsse dieser Umgebungsbedingungen auf die nanoskaligen Strukturen zu messen. Insbesondere kann der resultierende räumliche Abstand oder die Relativanordnung der Fluoreszenzmarker an den nanoskaligen Strukturen gemessen werden.

Darüber hinaus können die Positionen der einzelnen Fluoreszenzmarker in der Probe für mindestens zwei verschiedene Zeitpunkte aus den für diese mindestens zwei Zeitpunkte registrierten Intensitäten des Fluoreszenzlichts bestimmt werden, um beispielsweise Reaktionen der Strukturen auf geänderte Umgebungsbedingungen oder auch darüber hinaus eine Dynamik dieser Reaktionen zu messen. Dazu können die Strukturen zu den mindestens zwei Zeitpunkten verschiedenen Umgebungsbedingungen ausgesetzt werden oder die mindestens zwei Zeitpunkte können auf eine solche Änderung der Umgebungsbedingungen folgen.

Die zuletzt beschriebene Ausführungsform des erfindungsgemäßen Verfahrens ermöglicht insbesondere eine Durchführung von Drug Screenings, bei denen die geänderten Umgebungsbedingungen durch Zugabe einer der zu durchsuchenden Substanzen eingestellt werden. Die Reaktion der Struktur auf die Zugabe der jeweiligen Substanz wird durch wiederholtes erfindungsgemäßes Messen der Struktur direkt erfasst. Es bedarf hierzu keiner Durchführung von Nachweisreaktionen an der nanoskaligen Struktur. Zudem sind die bei einem solchen erfindungsgemäßen Drug Screening verbrauchten Mengen der zu durchsuchenden Substanzen winzig klein. Theoretisch reicht die Zugabe eines einzigen Moleküls jeder der Substanzen zu einer der nanoskaligen Strukturen aus. Entsprechend können auch Substanzen, die nur in kleinen Mengen zur Verfügung stehen, bei einem erfindungsgemäßen Drug Screening untersucht werden.

Eine erfindungsgemäße Vorrichtung zum räumlichen Messen mehrerer nanoskaliger Strukturen in einer Probe, wobei die einzelnen Strukturen an verschiedenen Stellen mit Fluoreszenzmarkern markiert sind, die aus Fluoreszenzmarkern, die sich in ihrem Anregungsspektrum und/oder ihrem Emissionsspektrum unterscheiden, und Fluoreszenzmarkern, die einen aktiven Zustand, in dem sie mit Anregungslicht zur Emission von Fluoreszenzlicht anregbar sind, und einen inaktiven Zustand, in dem sie zumindest mit demselben Anregungslicht nicht zur Emission von Fluoreszenzlicht anregbar sind, aufweisen und die mit Schaltlicht zwischen ihrem aktiven und ihrem inaktiven Zustand überführbar sind, ausgewählt sind, und wobei jede der Strukturen an ein Positionierhilfsmittel gekoppelt ist, dessen Position in der Probe relativ zu Fixpunkten der Probe bekannt und/oder aus von dem Positionierhilfsmittel flektiertem Licht bestimmbar ist, weist folgende Bestandteile auf:
- einen Probenhalter für die Probe,
- ein auf den Probenhalter gerichtetes Objektiv,
- eine Anregungslicht und optional weiteres Licht, das sich auf die Emission von Fluoreszenzlicht durch die Fluoreszenzmarker auswirkt, derart in das Objektiv einkoppelnde Lichtquelle, das eine Intensitätsverteilung des mit dem Objektiv fokussierten Anregungslichts oder des zugleich fokussierten weiteren Lichts ein lokales Minimum aufweist,
- eine Abtasteinrichtung, die dazu ausgebildet ist, eine Position des Minimums gegenüber dem Probenhalter zu verlagern,
- einen Detektor, der dazu ausgebildet ist, aus der Probe emittiertes Fluoreszenzlicht für die verschiedenen Positionen des Minimums getrennt zu registrieren,
- eine Auswerteeinrichtung, die dazu ausgebildet ist, Positionen von einzelnen Fluoreszenzmarkern in der Probe aus dem für den jeweiligen Fluoreszenzmarker für die verschiedenen Positionen des Minimums registrierten Intensitäten des Fluoreszenzlichts zu bestimmen, und
- eine Steuerung zur automatischen Durchführung der Schritte
- Anordnen des lokalen Minimums unter Anfahren der Positionen der Positionierhilfsmittel relativ zu den Fixpunkten der Probe und/oder unter Verwendung des von den Positionierhilfsmitteln reflektierten Lichts,
- Anregen der Fluoreszenzmarker,
- Registrieren des Fluoreszenzlichts und
- Bestimmen der Positionen der einzelnen Fluoreszenzmarker.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von zwei Fluoreszenzmarkern die Rede ist, ist dies so zu verstehen, dass genau zwei Fluoreszenzmarker oder mehr Fluoreszenzmarker verwendet werden. Die in den Patentansprüchen angeführten Merkmale können durch weitere Merkmale ergänzt werden oder die einzigen Merkmale sein, die das jeweilige Verfahren oder die jeweilige Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Ablaufdiagramm einer Ausführungsform des erfindungsgemäßen Verfahrens.
- **Fig. 2**: zeigt schematisch das Ankoppeln einer nanoskaligen Struktur an ein Positionierhilfsmittel und die Reaktion der nanoskaligen Struktur auf eine zugegebene Substanz.
- **Fig. 3**: erläutert die Positionierung eines Minimums einer Intensitätsverteilung von Anregungslicht gegenüber dem Positionierhilfsmittel bei einer MINFLUX-Ausführungsform des erfindungsgemäßen Verfahrens.
- **Fig. 4**: illustriert die Intensitätsverteilung des Anregungslichts bei der MINFLUX-Ausführungsform des erfindungsgemäßen Verfahrens in einer Draufsicht und in einem Schnitt durch das Minimum.
- **Fig. 5**: zeigt eine Probe mit in einem quadratischen Muster angeordneten Positionierhilfsmittel.
- **Fig. 6**: zeigt schematisch eine Vorrichtung zur Durchführung des erfindungsgemäßen Verfahrens und
- **Fig. 7**: illustriert die Intensitätsverteilung des Anregungslichts und von Fluoreszenzverhinderungslicht bei einer weiteren Ausführungsform des erfindungsgemäßen Verfahrens in einem Schnitt durch das Minimum.

### FIGURENBESCHREIBUNG

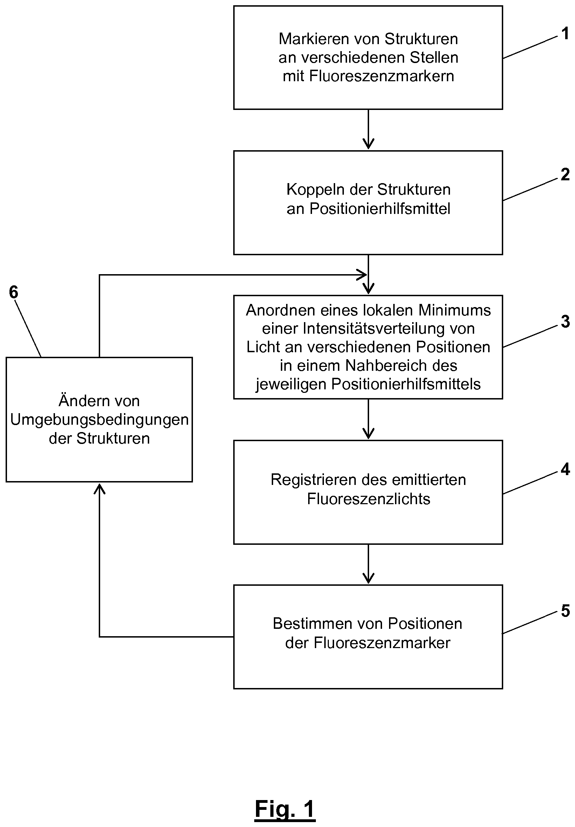

Das in **Fig. 1** in einem Ablaufdiagramm dargestellte erfindungsgemäße Verfahren beginnt mit einem Markieren 1 von nanoskaligen Strukturen an verschiedenen Stellen mit Fluoreszenzmarkern. Das heißt jede der nanoskaligen Strukturen wird an mindestens zwei ausgewählten und bei gleichen Strukturen auch gleichen Stellen mit jeweils einem Fluoreszenzmarker markiert. Die an den verschiedenen Stellen der jeweiligen Struktur angebrachten Fluoreszenzmarker können dabei identisch sein, soweit sie einen aktiven und einen inaktiven Zustand aufweisen, zwischen denen sie überführbar sind, oder sie unterscheiden sich in ihren spektralen Eigenschaften bezüglich des Anregungslichts, mit dem sie zur Emission von Fluoreszenzlicht anregbar sind, und/oder des von ihnen infolge der Anregung emittierten Fluoreszenzlichts.

Ein Koppeln 2 der nanoskaligen Strukturen an Positionierhilfsmittel ist in Fig. 1 als nachfolgender Schritt zu dem Markieren 1 gezeigt. Das Koppeln 2 der Strukturen an die Positionierhilfsmittel kann aber dem Markieren 1 der Strukturen auch vorausgehen. Weiter ist es möglich, dass das Markieren 1 und das Koppeln 2 gleichzeitig erfolgen. In jedem Fall liegen nach dem Markieren 1 und dem Koppeln 2 jeweils mehrfach markierte nanoskalige Strukturen vor, die einzeln an einzelne Positionierhilfsmittel gekoppelt sind. Die Positionen der Positionierhilfsmittel in einer Probe sind dabei entweder bekannt, was impliziert, dass sie fest sind, und/oder sie sind aus Licht, das von den Positionierhilfsmitteln reflektiert wird, weil sie beispielsweise Gold- oder Silberpartikel oder Quantum Dots umfassen, bestimmbar. Dieses Bestimmen der Positionen der Positionierhilfsmittel kann somit ohne Beanspruchung der Fluoreszenzmarker durch Anregung und Emission von Fluoreszenzlicht erfolgen. So lange ihre aktuellen Positionen immer bestimmbar sind, ist es auch möglich, dass die Positionierhilfsmittel in der Probe nicht fest liegen, sondern sich bewegen können. Bei nicht festen Positionen der Positionierhilfsmittel in der Probe ist es jedoch schwieriger einzuhalten, dass Abstände der Positionierhilfsmittel in der Probe nicht kleiner werden als die doppelte Beugungsgrenze bei der Wellenlänge des Anregungslichts und des Fluoreszenzlichts, um das von dem Fluoreszenzmarkern an den einzelnen Strukturen stammende Fluoreszenzlicht jeweils sicher einem bestimmten Positionierhilfsmittel und damit der daran gekoppelten Struktur zuordnen zu können.

Bei einem Anordnen 3 eines lokalen Minimums einer Intensitätsverteilung von Licht an verschiedenen Positionen in einem Nahbereich des jeweiligen Positionierhilfsmittels kann die Intensitätsverteilung des Lichts insbesondere eine solche von Anregungslicht sein. Wenn das lokale Minimum dieser Intensitätsverteilung in dem Nahbereich des jeweiligen Positionierhilfsmittels angeordnet wird, emittieren die in ihrem aktiven Zustand befindlichen Fluoreszenzmarker, die sich mit dem Anregungslicht anregen lassen, Fluoreszenzlicht. Dabei ist die Intensität des Fluoreszenzlichts von dem Abstand des jeweiligen Fluoreszenzmarkers zu dem lokalen Minimum der Intensitätsverteilung abhängig. Wenn ein Registrieren 4 des emittierten Fluoreszenzlichts so erfolgt, dass das Fluoreszenzlicht für jeden der Fluoreszenzmarker separat registriert wird, weil das Fluoreszenzlicht von verschiedenen Fluoreszenzmarkern aufgrund unterschiedlicher Wellenlängen trennbar ist und/oder jeweils nur einer der Fluoreszenzmarker aktiv ist, ist ein Bestimmen 5 der Position der einzelnen Fluoreszenzmarker aus den Intensitäten des für die verschiedenen Positionen des Minimums registrierten Fluoreszenzlichts von dem jeweiligen Fluoreszenzmarker möglich. Dabei hängt die Genauigkeit dieses Bestimmens 5 bei gleicher Anzahl der registrierten Photonen des Fluoreszenzlichts davon ab, wie dicht die Positionen des lokalen Minimums bereits an der Position des Fluoreszenzmarkers liegen. Indem die Positionen des lokalen Minimums beim Anordnen 3 in einem Nahbereich des jeweiligen Positionierhilfsmittels angeordnet werden, in dem sich auch die angekoppelte Struktur und die daran angebrachten Fluoreszenzmarker befinden, hängt die relative Genauigkeit beim Bestimmen 5 der Positionen der Fluoreszenzmarker von der Größe dieses Nahbereichs ab.

Soweit die Position des Positionierhilfsmittels sehr genau bekannt ist, beispielsweise mindestens auf ± 40 nm oder ± 20 nm oder ± 10 nm oder ± 5 nm, und das Koppeln 2 der Strukturen an die Positionierhilfsmittel so erfolgt, dass diese einen maximalen Abstand in derselben Größenordnung zu der Position des Positionierhilfsmittels aufweisen, kann der Nahbereich des jeweiligen Positionierhilfsmittel, in dem die Positionen des Minimums angeordnet werden, entsprechend klein gehalten werden. Wenn die Positionen aller Fluoreszenzmarker, mit denen die jeweilige Struktur markiert ist, bestimmt sind, wobei es insbesondere um relative Positionen der Fluoreszenzmarker zueinander, d. h. deren Abstände geht, ist die jeweilige Struktur ge- oder vermessen. Dieses Messen oder Vermessen kann nach oder während eines Änderns 6 von Umgebungsbedingungen der Strukturen wiederholt werden. Dabei können die Umgebungsbedingungen aller Strukturen in der Probe in gleicher Weise geändert werden. Auf diese Weise können beispielsweise die Reaktionen unterschiedlicher nanoskaliger Strukturen auf dieselbe Änderung der Umgebungsbedingungen erfasst werden. Alternativ kann das Ändern 6 der Umgebungsbedingungen in unterschiedlichen Bereichen der Probe und damit beispielsweise für gleiche Strukturen in unterschiedlicher Weise erfolgen. Beispielsweise können in verschiedenen Bereichen der Probe verschiedene Substanzen zu gleichen Strukturen hinzugefügt werden, um die unterschiedlichen Reaktion der Strukturen auf diese Substanzen zu erfassen. Dies kann beispielsweise im Rahmen eines Drug Screenings erfolgen. Unabhängig davon, ob die Strukturen in der Probe gleich oder verschieden sind, erfolgt auf das Ändern 6 der Umgebungsbedingungen der Strukturen ein erneutes Messen oder Vermessen der Strukturen durch Ausführung der Schritte Anordnen 3, Registrieren 4 und Bestimmen 5.

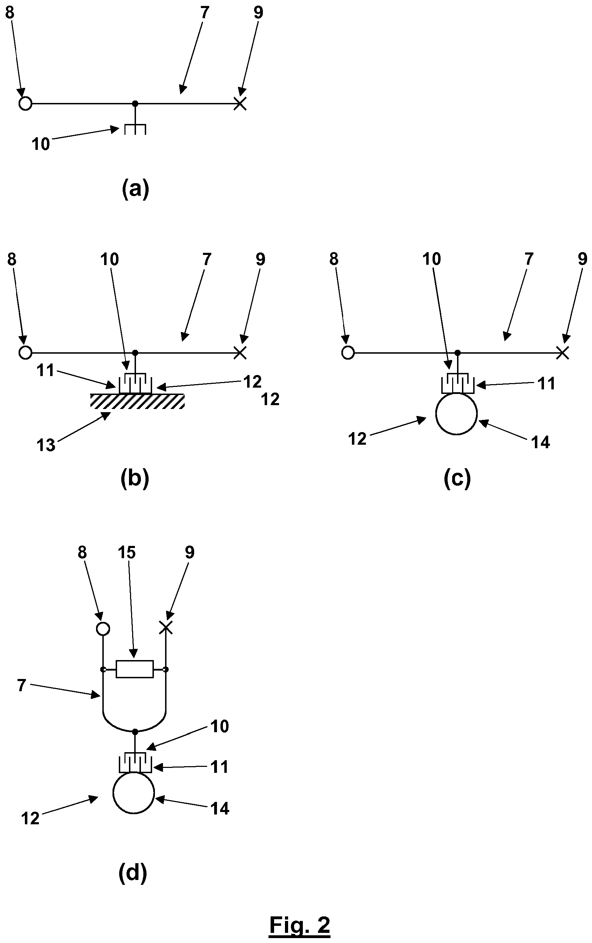

**Fig. 2 (a)** zeigt sehr schematisch ein Beispiel für eine nanoskalige Struktur 7, die an ihren beiden Enden mit jeweils einem Fluoreszenzmarker 8 bzw. 9 markiert ist. Die Fluoreszenzmarker 8 und 9 sind hier unterschiedlich dargestellt. Wie bereits ausgeführt, kann es sich jedoch auch um gleiche Fluoreszenzmarker handeln, wenn diese zwischen einem aktiven und einem inaktiven Zustand überführbar sind. Dies kann beispielsweise mit zusätzlichem Schaltlicht erfolgen, das die Fluoreszenzmarker 8 und 9 nach Übergangswahrscheinlichkeiten in ihren aktiven oder inaktiven Zustand überführt, so dass durch wiederholtes Aufbringen des Schaltlichts Schaltzustände erreicht werden, in denen einmal nur der eine Fluoreszenzmarker 8 und einmal nur der andere Fluoreszenzmarker 9 aktiv ist. Weiter ist an der Struktur 7 eine zentrale Ankoppelstelle 10 ausgebildet. Die Ankoppelstelle 10 ist zur Ankopplung an einen entsprechenden Ankoppelplatz 11 eines Positionierhilfsmittels 12 ausgebildet.

**Fig. 2 (b)** zeigt die Ankoppelstelle 10 angekoppelt an den Ankoppelplatz 11 eines Positionierhilfsmittels 12, das hier nur aus dem Ankoppelplatz 11 besteht, der gegenüber der restlichen Probe 13 festliegt.

**Fig. 2 (c)** zeigt hingegen die Struktur 7 über die Ankoppelstelle 10 angekoppelt an ein Positionierhilfsmittel 12, das neben dem Ankoppelplatz 11 einen Goldpartikel 14 umfasst. Mithilfe von Licht, das von dem Goldpartikel 14 reflektiert wird, ist auch eine sich ändernde Position des Positionierhilfsmittels 12 in der jeweiligen Probe erfassbar, ohne dass die Fluoreszenzmarker 8 und 9 dabei durch Anregen mit Anregungslicht und Emittieren von Fluoreszenzlicht beansprucht werden.

**Fig. 2 (d)** zeigt die an das Positionierhilfsmittel 12 gemäß Fig. 2 (c) angekoppelte Struktur 7, die infolge des Einwirkens einer Substanz 15 als Beispiel für geänderte Umgebungsbedingungen der Struktur 7 verändert ist. Konkret besteht die Veränderung in einem Zusammenfalten der Enden der Struktur 7, so dass sich der Abstand der dort angebrachten Fluoreszenzmarker 8 und 9 verringert. So kann die Reaktion der Struktur 7 auf die Substanz 15 durch Vermessen des Abstands der Fluoreszenzmarker 8 und 9 direkt erfasst werden.

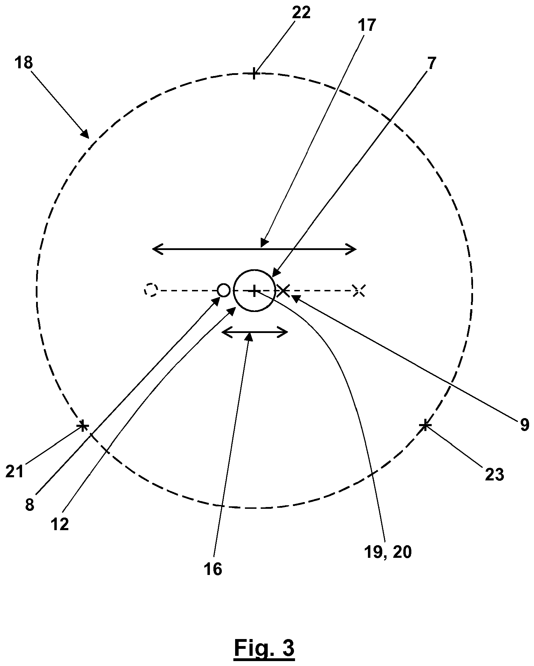

**Fig. 3** zeigt die Struktur 7 mit dem Positionierhilfsmittel 12 aus einer Blickrichtung orthogonal zu dem Abstand ihrer beiden Enden, wobei neben dem verringerten Abstand 16 gemäß Fig.2 (d) auch der Ausgangsabstand 17 bei gestreckter Struktur 7 gemäß den Fig. 2 (c) eingezeichnet ist. Weiter ist in Fig. 3 ein Nahbereich 18 um eine bekannte oder zuvor bestimmte Position 19 des Positionierhilfsmittels 12 dargestellt. In diesem Nahbereich wird ein lokales Minimum der Intensitätsverteilung des Anregungslichts zum Anregen des jeweiligen aktiven Fluoreszenzmarkers 8, 9 an vier verschiedene Positionen 20 bis 23 angeordnet, wobei die Position 20 mit der Position 19 des Positionierhilfsmittels 12 zusammenfällt und die Position 21 bis 23 auf einem um die Position 19, 20 verlaufenden Kreisbogen äquidistant angeordnet sind. Zu jeder Position 20 bis 23 wird das Fluoreszenzlicht von dem jeweiligen Fluoreszenzmarker 8, 9 separat bestimmt. Dann lässt sich aus den Intensitäten des registrierten Fluoreszenzlichts die Position des jeweiligen Fluoreszenzmarkers 8, 9 in dem Nahbereich sehr genau bestimmen. Die Genauigkeit der Bestimmung hängt von der Größe des Nahbereichs, d.h. seinen Abmessungen, insbesondere in Form seines Durchmessers ab, der gegenüber Fig. 3 auch halbiert sein könnte. Dies würde jedoch auch voraussetzen, dass die Position 19 des Positionierhilfsmittels 12 mit extremer Genauigkeit bekannt wäre und tatsächlich immer mit dem Zentrum der Struktur 7 zusammenfällt. Um hier auftretende Ungenauigkeiten und Varianten abzudecken, ist der Nahbereich 18 größer zu wählen, als dies unter idealen Randbedingungen erforderlich erscheint.

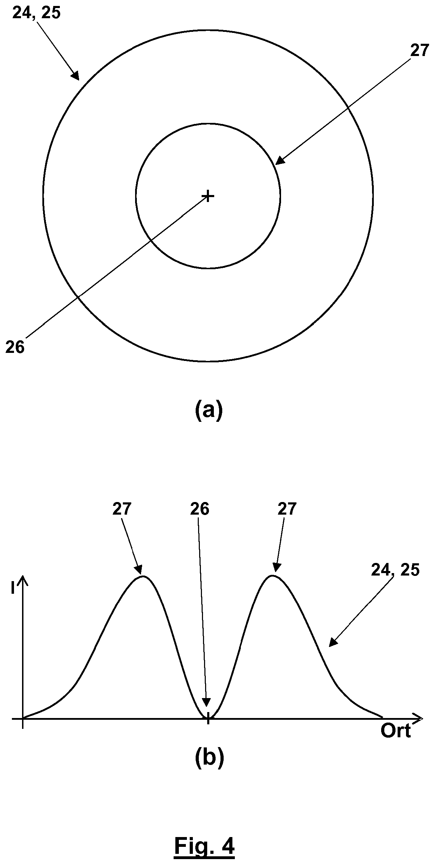

**Fig.** 4 zeigt eine Intensitätsverteilung 24 von Anregungslicht 25 mit einem zentralen lokalen Minimum 26 in einer Draufsicht **(a)** mit der Blickrichtung von Fig. 3 und einem dazu senkrecht durch das lokale Minimum 26 verlaufenden Schnitt **(b)**. Das lokale Minimum 26 ist allseitig von einem Maximum 27 der Intensitätsverteilung umschlossen. In dem lokalen Minimum 26 geht die Intensität des Anregungslichts 25 idealerweise auf null zurück. Mit zunehmenden Abstand zu dem Minimum 26 steigt die Intensität I zunächst etwa quadratisch an, bis sie in dem ringförmigen Maximum 27 ihren Maximalwert erreicht. Bei dem erfindungsgemäßen Verfahren wird von dieser Intensitätsverteilung 24 der Bereich unmittelbar um das Minimum 26 genutzt, in dem die Intensität I quadratisch ansteigt, so dass die mit der Intensität I korrelierte Intensität des von dem jeweiligen Fluoreszenzmarker emittierten und registrierten Fluoreszenzlichts einen eindeutigen Rückschluss auf die Entfernung des Fluoreszenzmarkers von dem Minimum 26 zulässt. Aus mehreren solcher Entfernungen, die für mehrere Positionen des Minimums 26 in dem jeweiligen Nahbereich bestimmt werden, lässt sich daher die genaue Position des Fluoreszenzmarkers beispielsweise durch Triangulation aber noch besser durch Anfitten einer ein lokales Minimum aufweisenden Funktion an die Intensitäten des zu den einzelnen Positionen des Minimums registrierten Fluoreszenzlichts bestimmen.

Die das lokale Minimum aufweisende räumliche Funktion, die an die Intensitäten des zu den einzelnen Positionen des Minimums registrierten Fluoreszenzlichts anzufitten ist, beschreibt die Abhängigkeit der Intensität des Fluoreszenzlichts von dem Abstand des jeweiligen Fluoreszenzmarkers zu dem lokalen Minimum 26. Entsprechend kann diese Funktion durch Abtasten desselben oder eines gleichartigen Fluoreszenzmarkers oder auch eines Licht reflektierenden Positionierhilfsmittels gleichen Wirkungsquerschnitts bestimmt werden. Dabei bedeutet Abtasten, dass das lokale Minimum 26 hierbei tatsächlich in kleinen Schritten verlagert wird, beispielsweise in mindestens 5x5 Schritten oder 10x10 Schritten, um den Verlauf einer zweidimensionalen Funktion zu bestimmen.

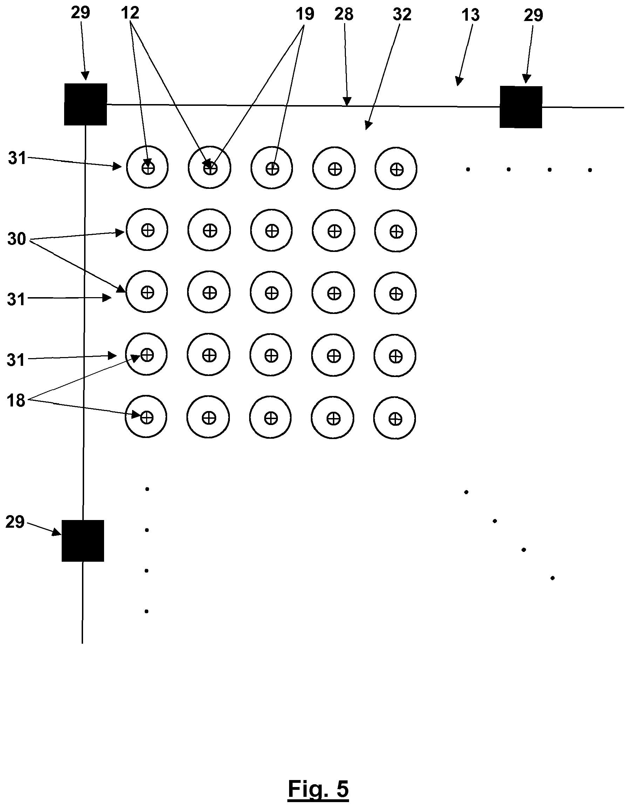

**Fig. 5** zeigt eine Probe 13 zur Durchführung einer Drug Screening Ausführungsform des erfindungsgemäßen Verfahrens. Die Probe 13 weist an ihrem Außenumfang 28 Fixpunkte 29 für das Positionieren der Probe 13 auf einem Probenhalter auf. Gegenüber den Fixpunkten 29 ist eine Vielzahl von Positionierhilfsmitteln 12 bezüglich deren Positionen 19 in einem quadratischen Muster angeordnet. Jedes Positionierhilfsmittel 12 befindet sich dabei in einer Vertiefung oder einem sogenannten Loch 30 der Probe 13. Die entsprechend in Zeilen 31 und Spalten 32 angeordneten Löchern 30 erlauben das Zugeben einer Substanz selektiv zu einer an das Positionierhilfsmittel 12 in dem jeweiligen Loch 30 in der Probe 13 angekoppelten Struktur. So können Reaktionen gleicher oder ungleicher Strukturen auf verschiedene Substanzen erfasst werden. Dazu werden die Strukturen vor und nach und evtl. auch während des Zugebens der Substanzen gemäß dem erfindungsgemäßen Verfahren vermessen, wobei die Positionen des Minimums 26 der Intensitätsverteilung 24 gemäß Fig. 4 jeweils direkt in dem Nahbereich 18 um die jeweilige Position 19 des Positionierhilfsmittels angeordnet wird. So ist die Reaktion der jeweiligen Struktur mit hoher Geschwindigkeit, geringer Anzahl der je Fluoreszenzmarker emittierten Photonen und dennoch hoher Genauigkeit erfassbar.

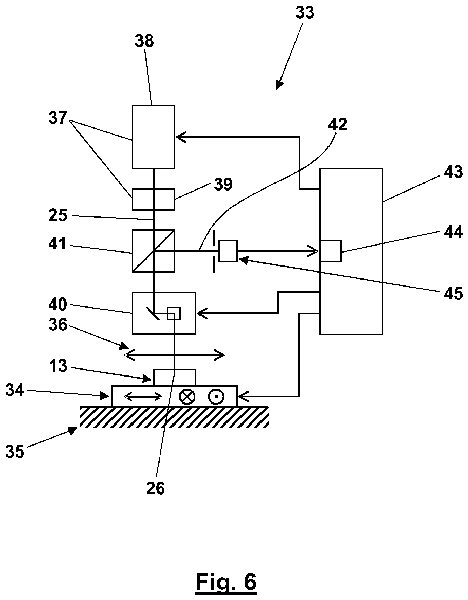

**Fig. 6** zeigt eine Vorrichtung 33 zur Durchführung des erfindungsgemäßen Verfahrens. Die Vorrichtung 33 weist einen Probenhalter 34 für die Probe 13 auf, mit dem die Probe 13 gegenüber einer Basis 35 verfahrbar ist, um sie gegenüber den weiteren basisfesten Bestandteilen der Vorrichtung 33 zu positionieren. Dieses Positionieren dient insbesondere zum Anfahren des jeweiligen Nahbereichs 18 um das jeweilige Positionierhilfsmittel. Konkret erfolgt die Positionierung gegenüber einer Intensitätsverteilung des Anregungslichts 25, das mit einem Objektiv 36 in die Probe fokussiert wird. Das Anregungslicht 25 wird von einer Lichtquelle 37 so bereitgestellt, dass sich beim Fokussieren mit dem Objektiv 36 die Intensitätsverteilung gemäß Fig. 4 in der Probe 13 einstellt. Dazu weist die Lichtquelle 37 neben einem Laser 38 Strahlformungsmittel 39 beispielsweise in Form einer sogenannten easySTED-Platte auf. Eine Abtasteinrichtung 40, die auch als Scanner bezeichnet wird, ist dazu vorgesehen, das Minimum 26 in der Probe innerhalb des jeweiligen Nahbereichs 18 zu verlagern. Ein zwischen der Lichtquelle 37 und der Abtasteinrichtung 40 angeordneter dichroitischer Strahlteiler 41 koppelt Fluoreszenzlicht 42 aus der Probe 13 zu einem konfokal angeordneten Detektor 42 aus. Eine Steuerung 43 steuert die Vorrichtung 33 zur automatischen Durchführung des erfindungsgemäßen Verfahrens, insbesondere bei einem Drug Screening. Dabei kann die Vorrichtung 33 auch eine in Fig. 6 nicht dargestellte Zusatzvorrichtung aufweisen, um unterschiedliche Substanzen in die einzelnen Löcher 30 hineinzugeben. Die Steuerung 43 umfasst eine Auswerteeinrichtung 44, die die Positionen der einzelnen Fluoreszenzmarker in der Probe aus den für den jeweiligen Fluoreszenzmarker für die verschiedenen Positionen des Minimums registrierten Intensitäten des Fluoreszenzlichts bestimmt.

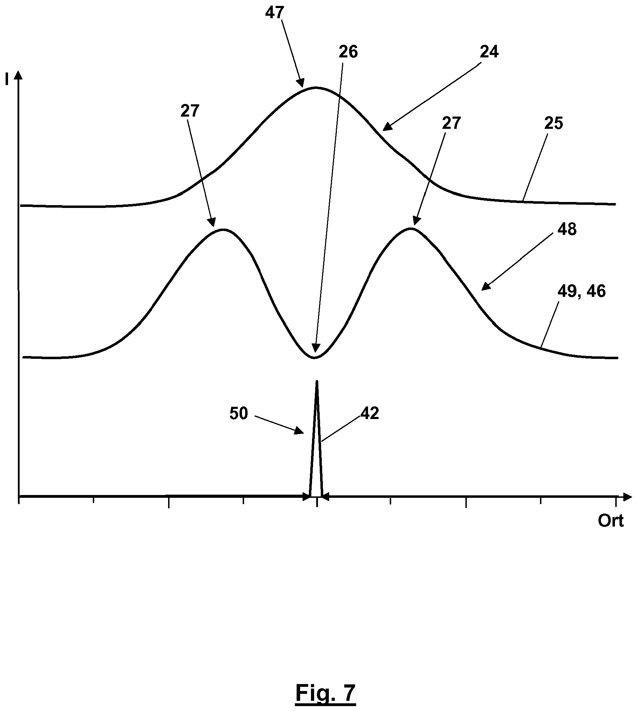

**Fig.** 7 illustriert eine weitere Ausführungsform des erfindungsgemäßen Verfahrens, bei der nicht die Intensitätsverteilung 24 des Anregungslichts 25 das lokale Minimum 26 aufweist, sondern eine Intensitätsverteilung 48 von weiterem Licht 49 in Form von Fluoreszenzverhinderungslicht 46. Dabei ist das von den Intensitätsmaxima 27 umgebene lokale Minimum 26 der Intensitätsverteilung 48 konzentrisch zu einem lokalen Maximum 47 der Intensitätsverteilung 24 angeordnet. Hieraus resultiert eine räumlich begrenzte Intensitätsverteilung 50 des von dem jeweiligen Fluoreszenzmarker emittierten Fluoreszenzlichts 42 über dessen Abstand zu dem lokalen Minimum 26. Dabei ist die in Fig. 7 dargestellte Intensitätsverteilung 50 Resultat einer Intensitätsverteilung 48 mit extrem hohen Intensitäten des Fluoreszenzverhinderungslichts 46 in den Maxima 27. Anders gesagt ist die Lichtintensitätsverteilung 48 in Fig. 7 in stark verkleinertem Maßstab dargestellt. Unter Verwendung der Intensitätsverteilung 50 kann aus dem zu verschiedenen Positionen des lokalen Minimums 26 registrierten Fluoreszenzlicht 42 auf die Position des vereinzelten, das Fluoreszenzlicht 42 emittierenden Fluoreszenzmarkers geschlossen werden. Dazu kann eine die Intensitätsverteilung 50 wiedergebende räumliche Funktion mit einem lokalen Maximum an die Intensitäten des registrierten Fluoreszenzlichts angefittet wird. Diese räumliche Funktion kann ebenfalls durch Abtasten des jeweiligen Fluoreszenzmarkers oder eines gleichartigen Fluoreszenzmarkers oder eines Positionierungshilfsmittels gleichen Wirkungsquerschnitts mit dem lokalen Minimum 26 und Registrieren des dabei aus der Probe emittierten Fluoreszenzlichts 42 bestimmt werden.

### BEZUGSZEICHENLISTE

- 1: Markieren
- 2: Koppeln
- 3: Anordnen
- 4: Registrieren
- 5: Bestimmen
- 6: Ändern
- 7: Struktur
- 8: Fluoreszenzmarker
- 9: Fluoreszenzmarker
- 10: Ankoppelstelle
- 11: Ankoppelplatz
- 12: Positionierhilfsmittel
- 13: Probe
- 14: Goldpartikel
- 15: Substanz
- 16: Abstand
- 17: Abstand
- 18: Nahbereich
- 19: Position des Positionierhilfsmittels
- 20: Position des Minimums
- 21: Position des Minimums
- 22: Position des Minimums
- 23: Position des Minimums
- 24: Intensitätsverteilung
- 25: Anregungslicht
- 26: Minimum
- 27: Maximum
- 28: Außenumfang
- 29: Fixpunkt
- 30: Loch
- 31: Zeile
- 32: Spalte
- 33: Vorrichtung
- 34: Probenhalter
- 35: Basis
- 36: Objektiv
- 37: Lichtquelle
- 38: Laser
- 39: Strahlformungsmittel
- 40: Abtasteinrichtung
- 41: dichroitischer Strahlteiler
- 42: Fluoreszenzlicht
- 43: Steuerung
- 44: Auswerteeinrichtung
- 45: Detektor
- 46: Fluoreszenzverhinderungslicht
- 47: Maximum
- 48: Intensitätsverteilung
- 49: Licht
- 50: Intensitätsverteilung
- I: Intensität

## Patentansprüche

1. Verfahren zum räumlichen Messen mehrerer nanoskaliger Strukturen in einer Probe (13) mit den Schritten:
- Markieren (1) der einzelnen Strukturen an verschiedenen Stellen mit Fluoreszenzmarkern (8, 9), die aus
- Fluoreszenzmarkern (8, 9), die sich in ihrem Anregungsspektrum und/oder ihrem Emissionsspektrum unterscheiden, und
- Fluoreszenzmarkern (8, 9), die einen aktiven Zustand, in dem sie mit Anregungslicht (25) zur Emission von Fluoreszenzlicht (42) anregbar sind, und einen inaktiven Zustand, in dem sie zumindest mit demselben Anregungslicht (25) nicht zur Emission von Fluoreszenzlicht (42) anregbar sind, aufweisen und die mit Schaltlicht zwischen ihrem aktiven und ihrem inaktiven Zustand überführbar sind,
ausgewählt werden,
- Anregen der Fluoreszenzmarker (8, 9) mit Anregungslicht (25) zur Emission von Fluoreszenzlicht (42), wobei eine Intensitätsverteilung (24) des Anregungslichts (25) oder eine Intensitätsverteilung (48) von weiterem Licht, das sich auf die Emission von Fluoreszenzlicht durch die Fluoreszenzmarker (8, 9) auswirkt, ein lokales Minimum (26) aufweist, das an verschiedenen Positionen (20, 21, 22, 23) in der Probe (13) angeordnet wird,
- Registrieren (4) des aus der Probe (13) emittierten Fluoreszenzlichts (42) getrennt für die einzelnen Fluoreszenzmarker (8, 9) und für die verschiedenen Positionen (20, 21, 22, 23) des Minimums (26),
- Bestimmen (5) von Positionen der einzelnen Fluoreszenzmarker (8, 9) in der Probe (13) aus den für den jeweiligen Fluoreszenzmarker (8, 9) für die verschiedenen Positionen (20, 21, 22, 23) des Minimums (26) registrierten Intensitäten des Fluoreszenzlichts (42),
**gekennzeichnet durch**
- Koppeln (2) der einzelnen Strukturen (7) an einzelne Positionierhilfsmittel (12), deren Positionen (19) in der Probe (13) bekannt sind und/oder nach dem Koppeln (2) aus von den Positionierhilfsmitteln (12) reflektiertem Licht bestimmt werden, und
- Anordnen (3) des lokalen Minimums (26) an den verschiedenen Positionen (20, 21, 22, 23) in einem Nahbereich (18) um die Position (19) des jeweiligen Positionierhilfsmittels (12), dessen Abmessungen nicht größer als die Beugungsgrenze bei der Wellenlänge des Anregungslichts (25) und der Wellenlänge des Fluoreszenzlichts (42) sind.

2. Verfahren nach Anspruch 1, wobei die Abmessungen des Nahbereichs (18) nicht größer als die Hälfte oder ein Viertel der Beugungsgrenze bei der Wellenlänge des Anregungslichts (25) und der Wellenlänge des Fluoreszenzlichts (42) sind.

3. Verfahren nach einem der vorhergehenden Ansprüche, wobei die Positionen der einzelnen Fluoreszenzmarker (8, 9) aus den für nicht mehr als 4n oder für nicht mehr als 3n oder für nicht mehr als 2n verschiedene Positionen (20, 21, 22, 23) des Minimums (26) registrierten Intensitäten des Fluoreszenzlichts (42) bestimmt werden, wobei n die Anzahl der Raumrichtungen ist, in denen die Positionen der einzelnen Fluoreszenzmarker (8, 9) in der Probe (13) bestimmt werden.

4. Verfahren nach einem der vorhergehenden Ansprüche, wobei das Bestimmen (5) der Positionen der einzelnen Fluoreszenzmarker (8, 9) in der Probe (13) ein Anfitten einer ein lokales Extremum aufweisenden räumlichen Funktion an die für den jeweiligen Fluoreszenzmarker (8, 9) für die verschiedenen Positionen (20, 21, 22, 23) des Minimums (26) registrierten Intensitäten des Fluoreszenzlichts (42) umfasst.

5. Verfahren nach Anspruch 4, wobei die das lokales Extremum aufweisende räumlichen Funktion unter Abtasten mindestens eines der Licht reflektierenden Positionierhilfsmittel (12) oder mindestens eines der oder eines weiteren Fluoreszenzmarkers (8, 9) mit dem Minimum (26) und Registrieren (4) des dabei aus der Probe (13) reflektierten Lichts oder emittierten Fluoreszenzlichts (42) bestimmt wird, wobei beim Abtasten des mindestens einen der Licht reflektierenden Positionierhilfsmittel (12) optional dessen Position (19) in der Probe (13) bestimmt wird.

6. Verfahren nach einem der vorhergehenden Ansprüche, wobei die Positionen (19) der Positionierhilfsmittel (12) mit anderen Mitteln zur Relativverlagerung des Minimums (26) gegenüber der Probe (13) angefahren werden als die Positionen (20, 21, 22, 23) des Minimums (26) innerhalb der Nahbereiche (18).

7. Verfahren nach einem der vorhergehenden Ansprüche, wobei die Positionen (19) der Positionierhilfsmittel (12) relativ zu Fixpunkten (29) der Probe (13) festliegen und wobei die Positionen (19) der Positionierhilfsmittel (12) relativ zu den Fixpunkten (29) der Probe (13) angefahren werden.

8. Verfahren nach einem der vorhergehenden Ansprüche, wobei die Positionen (19) der Positionierhilfsmittel (12) in Mindestabständen zueinander angeordnet werden, die nicht kleiner als die doppelte Beugungsgrenze bei der Wellenlänge des Anregungslichts (25) und der Wellenlänge des Fluoreszenzlichts (42) sind.

9. Verfahren nach einem der vorhergehenden Ansprüche, wobei die Positionen (19) der Positionierhilfsmittel (12) in einem vordefinierten Muster in der Probe (13) angeordnet werden, wobei das vordefinierte Muster optional aus periodischen, hexagonalen und quadratischen Mustern ausgewählt wird.

10. Verfahren nach einem der vorhergehenden Ansprüche, wobei die Positionierhilfsmittel (12) in der Probe (13) festliegende Ankoppelplätze (11) für die Strukturen (7) sind, wobei die Strukturen (7) über eine Immunreaktion an die Ankoppelplätze (11) angekoppelt werden.

11. Verfahren nach einem der vorhergehenden Ansprüche, wobei die Positionierhilfsmittel (12) Goldpartikel (14) oder Silberpartikel oder Quantum Dots aufweisen.

12. Verfahren nach einem der vorhergehenden Ansprüche, wobei die Strukturen (7) gleich sind, wobei die die Strukturen (7) in verschiedenen Bereichen der Probe (13) verschiedenen Umgebungsbedingungen ausgesetzt werden.

13. Verfahren nach einem der vorhergehenden Ansprüche, wobei die Positionen der einzelnen Fluoreszenzmarker (8, 9) in der Probe (13) für mindestens zwei verschiedene Zeitpunkte aus den für diese mindestens zwei Zeitpunkte registrierten Intensitäten des Fluoreszenzlichts (42) bestimmt werden, wobei die Strukturen (7) zu den mindestens zwei Zeitpunkten verschiedenen Umgebungsbedingungen ausgesetzt werden oder die mindestens zwei Zeitpunkte auf eine Änderung der Umgebungsbedingungen folgen.

14. Vorrichtung zum räumlichen Messen mehrerer nanoskaliger Strukturen in einer Probe (13), wobei die einzelnen Strukturen an verschiedenen Stellen mit Fluoreszenzmarkern (8, 9) markiert sind, die aus Fluoreszenzmarkern (8, 9), die sich in ihrem Anregungsspektrum und/oder ihrem Emissionsspektrum unterscheiden, und Fluoreszenzmarkern (8, 9), die einen aktiven Zustand, in dem sie mit Anregungslicht (25) zur Emission von Fluoreszenzlicht (42) anregbar sind, und einen inaktiven Zustand, in dem sie zumindest mit demselben Anregungslicht (25) nicht zur Emission von Fluoreszenzlicht (42) anregbar sind, aufweisen und die mit Schaltlicht zwischen ihrem aktiven und ihrem inaktiven Zustand überführbar sind, ausgewählt sind, und wobei jede der Strukturen (7) an ein Positionierhilfsmittel (12) gekoppelt ist, dessen Position (19) in der Probe (13) relativ zu Fixpunkten (29) der Probe (13) bekannt und/oder aus von dem Positionierhilfsmittel (12) reflektiertem Licht bestimmbar ist, mit
- einem Probenhalter (34) für die Probe (13),
- einem auf den Probenhalter (34) gerichteten Objektiv (36),
- einer Lichtquelle (37), die Anregungslicht (25) und optional weiteres Licht, das sich auf die Emission von Fluoreszenzlicht (42) durch die Fluoreszenzmarker (8, 9) auswirkt, derart in das Objektiv (36) einkoppelt, dass eine Intensitätsverteilung des mit dem Objektiv (36) fokussierten Anregungslichts (25) oder des zugleich fokussierten weiteren Lichts ein lokales Minimum (26) aufweist,
- einer Abtasteinrichtung (40), die dazu ausgebildet ist, eine Position (20, 21, 22, 23) des Minimums (26) gegenüber dem Probenhalter (34) zu verlagern,
- einem Detektor (45), der dazu ausgebildet ist, aus der Probe (13) emittiertes Fluoreszenzlicht (42) für die verschiedenen Positionen (20, 21, 22, 23) des Minimums (26) getrennt zu registrieren,
- einer Auswerteeinrichtung (44), die dazu ausgebildet ist, Positionen von einzelnen Fluoreszenzmarker (8, 9) in der Probe (13) aus den für den jeweiligen Fluoreszenzmarker (8, 9) für die verschiedenen Positionen (20, 21, 22, 23) des Minimums (26) registrierten Intensitäten des Fluoreszenzlichts (42) zu bestimmen, und
- einer Steuerung zur automatischen Durchführung der Schritte
- Anordnen (3) des lokalen Minimums (26) unter Anfahren der Positionen (19) der Positionierhilfsmittel (12) relativ zu Fixpunkten (29) der Probe (13) und/oder unter Verwendung des von den Positionierhilfsmitteln (12) reflektierten Lichts,
- Anregen der Fluoreszenzmarker (8, 9),
- Registrieren (4) des Fluoreszenzlichts (42) und
- Bestimmen (5) der Positionen der einzelnen Fluoreszenzmarker (8, 9) des Verfahrens nach einem der vorhergehenden Ansprüche.

## Claims

1. Method of spatially measuring a plurality of nano-scale structures in a sample (13), comprising:
- marking (1) the individual structures at different locations with fluorescent markers (8, 9) which are selected from
- fluorescent markers (8, 9) that differ in their excitation spectrum and/or their emission spectrum, and
- fluorescent markers (8, 9) that have an active state in which they are excitable with excitation light (25) for emission of fluorescence light (42) and an inactive state in which they are, at least with the same excitation light (25), not excitable for emission of fluorescence light (42), and that are transferable with switching light between their active and their inactive state,
- exciting the fluorescent markers (8, 9) with excitation light (25) for emission of fluorescence light (42), wherein an intensity distribution (24) of the excitation light (25) or an intensity distribution (48) of further light which has an influence on the emission of fluorescence light by the fluorescent markers (8, 9) comprises a local minimum (26) which is arranged at different positions in the sample (13),
- registering (4) the fluorescence light (42) emitted out of the sample (13) separately for the individual fluorescent markers (8, 9) and for the different positions of the minimum (20, 21, 22, 23),
- determining (5) positions of the individual fluorescent markers (8, 9) in the sample (13) from the intensities of the fluorescence light (42) registered for the respective fluorescent marker (8, 9) for the different positions (20, 21, 22, 23) of the minimum (26),
**characterized by**
- coupling (2) the individual structures (7) to individual positioning aids (12) whose positions in the sample (13) are known and/or are determined after the coupling (2) from light reflected by the positioning aids (12), and
- arranging (3) the local minimum (26) at the different positions (20, 21, 22, 23) in a close-up range (18) around the position of the respective positioning aid (19), whose dimensions are not larger than the diffraction limit at the wavelength of the excitation light (25) and the wavelength of the fluorescence light (42).

2. Method of claim 1, wherein the dimensions of the close-up range (18) are not larger than a half or a quarter of the diffraction limit at the wavelength of the excitation light (25) and the wavelength of the fluorescence light (42).

3. Method of any of the preceding claims, wherein the positions of the individual fluorescent markers (8, 9) are determined from the intensities of the fluorescence light (42) which are registered for not more than 4n or for not more than 3n or for not more than 2n different positions (20, 21, 22, 23) of the minimum (26), wherein n is the number of the spatial directions in which the positions of the individual fluorescent markers (8, 9) in the sample (13) are determined.

4. Method of any of the preceding claims, wherein the determining (5) of the positions of the individual fluorescent markers (8, 9) in the sample (13) includes fitting a spatial function comprising a local extremum to the intensities of the fluorescence light (42) registered for the respective fluorescent marker (8, 9) for the different positions (20, 21, 22, 23) of the minimum (26).

5. Method of claim 4, wherein the spatial function comprising the local extremum is determined by scanning at least one of the light reflecting positioning aids (12) or the or a further fluorescent marker(s) (8, 9) with the minimum (26) and registering (4) the light reflected or the fluorescence light (42) emitted out of the sample (13) while scanning, wherein, optionally, in scanning the at least one of the light reflecting positioning aids (12) its position in the sample (13) is determined.

6. Method of any of the preceding claims, wherein the positions of the positioning aids (19) are approached by other means for relative movement of the minimum (26) with regard to the sample (13) than the positions of the minimum (20, 21, 22, 23) within the close-up ranges (18).

7. Method of any of the preceding claims, wherein the positions of the positioning aids (19) are fixed relative to fixed points (29) of the sample (13) and wherein the positions of the positioning aids (19) are approached relative to the fixed points (29) of the sample (13).

8. Method of any of the preceding claims, wherein the positions of the positioning aids (19) are arranged at minimum distances with regard to each other, which are not smaller than twice the diffraction limit at the wavelength of the excitation light (25) and the wavelength of the fluorescence light (42).

9. Method of any of the preceding claims, wherein the positions of the positioning aids (19) are arranged in a predefined pattern in the sample (13), wherein the predefined pattern is selected from periodical, hexagonal and square patterns.

10. Method of any of the preceding claims, wherein the positioning aids (12) in the sample (13) are fixed coupling sites (11) for the Structures (7), wherein the structures (7) are coupled to the coupling sites (11) via an immunoreaction.

11. Method of any of the preceding claims, wherein the positioning aids (12) comprise gold particles (14), silver particles and quantum dots.

12. Method of any of the preceding claims, wherein the structures (7) are equal, wherein the structures (7) are subjected to different surrounding conditions in different areas of the sample (13).

13. Method of any of the preceding claims, wherein the positions of the individual fluorescent markers (8, 9) in the sample (13) are determined for at least two different points in time from the intensities of the fluorescence light (42) registered for these at least two points in time, wherein the structures (7) are subjected to different surrounding conditions at the at least two points in time, or the at least two points in time succeed to an alteration of the surrounding conditions.

14. Apparatus for spatially measuring a plurality of nano-scale structures in a sample (13), wherein the individual structures are marked at different locations with fluorescent markers (8, 9) which are selected from fluorescent markers (8, 9) that differ in their excitation spectrum and/or their emission spectrum, and fluorescent markers (8, 9) that have an active state in which they are excitable with excitation light (25) for emission of fluorescence light (42) and an inactive state in which they are, at least with the same excitation light (25), not excitable for emission of fluorescence light (42), and that are transferable with switching light between their active and their inactive state, and wherein each of the structures (7) is coupled to a positioning aid (12) whose position in the sample (13) relative to fixed points (29) of the sample (13) is known and/or can be determined from light reflected by the positioning aid (12), comprising
- a sample holder (34) for the sample (13),
- an objective lens (36) directed onto the sample holder (34),
- a light source (37) which couples excitation light (25) and, optionally, further light that has an influence on the emission of *fluorescence light (42)* by the fluorescent markers (8, 9) into the objective lens (36) in such a way that an intensity distribution of the focused excitation light (25) or the simultaneously focused further light comprises a local minimum (26),
- a scanner (40) which is configured to move a position of the minimum (20, 21, 22, 23) with regard to the sample holder (34),
- a detector (45) which is configured to register fluorescence light (42) emitted out of the sample (13) separately for the different positions of the minimum (20, 21, 22, 23),
- an evaluation unit (44) which is configured to determine positions of individual fluorescent markers (8, 9) in the sample (13) from the intensities of the fluorescence light (42) registered for the respective fluorescent marker (8, 9) for the different positions of the minimum (20, 21, 22, 23), and
- a controller for automatically executing the steps of
- arranging (3) the local minimum (26) by approaching the positions of the positioning aids (19) relative to the fixed points (29) of the sample (13) and/or by using the light reflected by the positioning aids (12),
- exciting the fluorescent markers (8, 9),
- registering (4) the fluorescence light (42), and
- determining (5) the positions of the individual fluorescent markers (8, 9) of the method of any of the preceding claims.

## Revendications

1. Procédé de mesure spatiale de plusieurs structures à l'échelle nanométrique dans un échantillon (13), avec les étapes suivantes :
- marquage (1) des différentes structures à différents endroits avec des marqueurs fluorescents (8, 9) sélectionnés parmi
- des marqueurs fluorescents (8, 9) qui se distinguent par leur spectre d'excitation et/ou leur spectre d'émission et
- des marqueurs fluorescents (8, 9) qui présentent un état actif, dans lequel ils peuvent être excités avec une lumière d'excitation (25) pour l'émission d'une lumière fluorescente (42) et un état inactif, dans lequel ils ne peuvent pas être excités au moins avec la même lumière d'excitation (25) pour l'émission de lumière fluorescente (42), et ils peuvent être commutés entre leur état actif et dans leur état inactif avec une lumière de commutation,
- excitation des marqueurs fluorescents (8, 9) avec une lumière d'excitation (25) pour l'émission de lumière fluorescente (42), dans lequel une répartition d'intensité (24) de la lumière d'excitation (25) ou une répartition d'intensité (48) d'une autre lumière, qui agit sur l'émission de lumière fluorescente par les marqueurs fluorescents (8, 9), présente un minimum local (26) qui est disposé à des positions différentes (20, 21, 22, 23) dans l'échantillon (13),
- enregistrement (4) de la lumière fluorescente (42) émise à partir de l'échantillon (13) séparément pour les différents marqueurs fluorescents (8, 9) et pour les différentes positions (20, 21, 22, 23) du minimum (26),
- détermination (5) des positions des différents marqueurs fluorescents (8, 9) dans l'échantillon (13) à partir des intensités de la lumière fluorescente (42) enregistrée pour les marqueurs fluorescents (8, 9) respectifs pour les différentes positions (20, 21, 22, 23) du minimum (26),
**caractérisé par**
- le couplage (2) des différentes structures (7) à différents moyens de positionnement (12), dont les positions (19) dans l'échantillon (13) sont connues et/ou sont déterminées après le couplage (2) à partir de la lumière réfléchie par les moyens de positionnement (12) et
- disposition (3) du minimum local (26) aux différentes positions (20, 21, 22, 23) dans une zone proche (18) autour de la position (19) du moyen de positionnement (12) respectif, dont les dimensions ne sont pas plus grandes que la limite de diffraction pour la longueur d'onde de la lumière d'excitation (25) et la longueur d'onde de la lumière fluorescente (42).

2. Procédé selon la revendication 1, dans lequel les dimensions de la zone proche (18) ne sont pas plus grandes que la moitié ou un quart de la limite de diffraction pour la longueur d'onde de la lumière d'excitation (25) et la longueur d'onde de la lumière fluorescente (42).

3. Procédé selon l'une des revendications précédentes, dans lequel les positions des différents marqueurs fluorescents (8, 9) sont déterminées à partir des intensités, enregistrées pour pas plus de 4n ou pour pas plus de 3n ou pour pas plus de 2n différentes positions (20, 21, 22, 23) du minimum (26), de la lumière fluorescente (42), dans lequel n est le nombres de directions spatiales dans lesquelles les positions des différents marqueurs fluorescents (8, 9) dans l'échantillon (13) sont déterminées.

4. Procédé selon l'une des revendications précédentes, dans lequel la détermination (5) des positions des différents marqueurs fluorescents (8, 9) dans l'échantillon (13) comprend un ajustement d'une fonction spatiale présentant un extremum local aux intensités de la lumière fluorescente (42), enregistrées pour le marqueur fluorescent (8, 9) respectif pour les différentes positions (20, 21, 22, 23) du minimum (26).

5. Procédé selon la revendication 4, dans lequel la fonction spatiale présentant l'extremum local est déterminée par balayage d'au moins un moyen de positionnement (12) réfléchissant la lumière ou d'au moins un des autres marqueurs fluorescents (8, 9) avec le minimum (26) et l'enregistrement (4) de la lumière réfléchie ou de la lumière fluorescente (42) émise par l'échantillon (13), dans lequel, lors du balayage de l'au moins moyen de positionnement (12) réfléchissant la lumière, en option, sa position (19) dans l'échantillon (13) est déterminée.

6. Procédé selon l'une des revendications précédentes, dans lequel les positions (19) des moyens de positionnement (12) sont approchées avec d'autres moyens pour le déplacement relatif du minimum (26) par rapport à l'échantillon (13), en tant que positions (20, 21, 22, 23) du minimum (26) à l'intérieur des zones proches (18).

7. Procédé selon l'une des revendications précédentes, dans lequel les positions (19) des moyens de positionnement (12) sont fixes par rapport à des points fixes (29) de l'échantillon (13) et dans lequel les positions (19) des moyens de positionnement (12) sont approchées par rapport aux points fixes (29) de l'échantillon (13).

8. Procédé selon l'une des revendications précédentes, dans lequel les positions (19) des moyens de positionnement (12) sont disposées les unes par rapport aux autres à des distances minimales qui ne sont pas inférieures au double de la limite de diffraction pour la longueur d'onde de la lumière d'excitation (25) et la longueur d'onde de la lumière fluorescente (42).

9. Procédé selon l'une des revendications précédentes, dans lequel les positions (19) des moyens de positionnement (12) sont disposées dans un motif prédéfini dans l'échantillon (13), dans lequel le motif prédéfini est sélectionné en option parmi des motifs périodiques, hexagonaux et carrés.

10. Procédé selon l'une des revendications précédentes, dans lequel les moyens de positionnement (12) sont des emplacements de couplage (11), fixes dans l'échantillon (13), pour les structures (7), dans lequel les structures (7) sont couplées par l'intermédiaire d'une réaction immune aux emplacements de couplage (11).

11. Procédé selon l'une des revendications précédentes, dans lequel les moyens de positionnement (12) comprennent des particules d'or (14) ou des particules d'argent ou des « quantum dots ».

12. Procédé selon l'une des revendications précédentes, dans lequel les structures (7) sont identiques, dans lequel les structures (7) sont exposées à différentes conditions environnementales dans différentes zones de l'échantillon (13).

13. Procédé selon l'une des revendications précédentes, dans lequel les positions des différents marqueurs fluorescents (8, 9) dans l'échantillon (13) sont déterminées pour au moins deux différents moments à partir des intensités de la lumière fluorescente (42), enregistrées pour ces au moins deux moments, dans lequel les structures (7) sont exposées, à ces au moins deux moments, à différentes conditions environnementales ou les au moins deux moments suivent une modification des conditions environnementales.

14. Dispositif pour la mesure spatiale de plusieurs structures à l'échelle nanométrique dans un échantillon (13), dans lequel les différentes structures sont marques à différents endroits avec des marqueurs fluorescents (8, 9) qui sont sélectionnés parmi des marqueurs fluorescents (8, 9), qui se distinguent par leur spectre d'excitation et/ou leur spectre d'émission et des marqueurs fluorescents (8, 9) qui présentent un état actif, dans lequel ils peuvent être excités avec une lumière d'excitation (25) pour l'émission d'une lumière fluorescente (42) et un état inactif, dans lequel ils ne peuvent pas être excités au moins avec la même lumière d'excitation (25) pour l'émission d'une lumière fluorescente (42), et qui peuvent être commutés entre leur état actif et leur état inactif avec une lumière de commutation et dans lequel chacune des structures (7) est couplée à un moyen de positionnement (12) dont la position (19) dans l'échantillon (13) par rapport à points fixes (29) de l'échantillon (13) est connue et/ou peut être déterminée à partir de la lumière réfléchie par les moyens de positionnement (12), avec
- un support d'échantillon (34) pour l'échantillon (13),
- un objectif (36) dirigé vers le support d'échantillon (34),
- une source de lumière (37) qui introduit, dans l'objectif (36), la lumière d'excitation (25) et en option une autre lumière qui agit que l'émission de lumière fluorescente (42) par les marqueurs fluorescents (8, 9), de façon à ce qu'une répartition d'intensité de la lumière d'excitation (25) focalisée avec l'objectif (36) ou de l'autre lumière focalisée simultanément présente un minimum local (26),
- un dispositif de balayage (40) qui est conçu pour déplacer une position (20, 21, 22, 23) du minimum (26) par rapport au support d'échantillon (34),
- un détecteur (45) qui est conçu pour enregistrer séparément la lumière fluorescente (42) émise à partir de l'échantillon (13) pour les différentes positions (20, 21, 22, 23) du minimum (26),
- un dispositif d'analyse (44) qui est conçu pour déterminer les positions de différents marqueurs fluorescents (8, 9) dans l'échantillon (13) à partir des intensités de la lumière fluorescente (42), enregistrées pour les différentes positions (20, 21, 22, 23) du minimum (26) et
- une commande pour l'exécution automatique des étapes suivantes
- disposition (3) du minimum local (26) en approchant les positions (19) des moyens de positionnement (12) par rapport aux points fixes (29) de l'échantillon (13) et/ou en utilisant la lumière réfléchie par les moyens de positionnement (12),
- excitation des marqueurs fluorescents (8, 9),
- enregistrement (4) de la lumière fluorescente (42) et
- détermination (5) des positions des différents marqueurs (8, 9) du procédé selon l'une des revendications précédentes.
